# EUROPEAN PATENT APPLICATION

(11) **EP 4 300 485 A1**
(43) Date of publication of application: **03.01.2024**
(21) Application number: 21930653.7
(22) Date of filing: 15.03.2021
(51) Int. Cl.: G10L 15/22

(54) **MEDIA PROCESSING DEVICE AND METHOD**

(71) Applicant: Huawei Technologies Co., Ltd., Shenzhen, Guangdong 518129 (CN)
(72) Inventor: YANG, Mingjie, Shenzhen, Guangdong 518129 (CN); HAO, Xiaowei, Shenzhen, Guangdong 518129 (CN)
(74) Representative: Epping - Hermann - Fischer
(86) International application number: PCT/CN2021/080750
(87) International publication number: WO 2022/193056

(57) **Abstract**

Embodiments of this application disclose a media processing apparatus and method. The media processing apparatus is applied to an intelligent terminal, and may include a CPU, an audio input/output unit, an audio DSP, and a video processing unit. The intelligent terminal includes a low power mode and a speaker mode. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state. When the intelligent terminal is in the low power mode, the CPU is configured to receive a first voice instruction through the audio input/output unit; and the CPU is further configured to: in response to the first voice instruction, control the intelligent terminal to switch from the low power mode to the speaker mode. This ensures a response speed in the speaker mode of the intelligent terminal while ensuring service life of the intelligent terminal.

## Description

### TECHNICAL FIELD

This application relates to the field of computer technologies, and in particular, to a media processing apparatus and method.

### BACKGROUND

Currently, a smart speech function is generally added to an intelligent terminal on the market. For example, a smart speech function is added to a television, and a user may control, through a voice conversation with the television, the television to perform an operation such as video play, music play, or content search. This greatly facilitates an interactive operation between the user and the television.

After the television has the smart speech, the television may be converted into a smart speaker when the television is in a screen-off state. For example, audio play and other voice interaction may be performed when a screen is off. To support the smart speaker mode of the television, a system and a chip of the television remains in a normal operating state after the screen of the television is off, to ensure normal operation of the smart speaker mode. Similar to an on state, in this solution, voice wakeup is fast, and takes approximately 1s. However, in this solution, because the chip is in the normal operating state, overall power consumption of the television is high. This greatly affects service life of the television.

In the conventional technology, to ensure the service life of the television, a control unit that supports audio input, local speech recognition, and wakeup processing may be integrated into a microcontroller unit (Microcontroller Unit, MCU) of the chip. After a primary chip (also referred to as a primary controller) enters a standby state, the chip may enter an MCU operating mode (to be specific, only the MCU in the chip is in a normal operating state). In the MCU operating mode, the primary controller is powered off, and only the MCU needs to listen to and parse a voice wakeup instruction. After a voice wakeup instruction is recognized, the MCU wakes up the primary controller to enter an operating state. In this solution, in the standby state, only the MCU is in an operating state, and the primary controller and other logic modules are in an off state. Although power consumption of the entire system is low, costs of the chip increase due to the integration of the control unit into the MCU. In addition, that the MCU recognizes a voice wakeup instruction and then wakes up other related logic modules in the chip is equivalent to that the television is powered on again, and voice wakeup may take even more than 10s, resulting in a slow response to voice wakeup and audio play.

Therefore, how to ensure a response speed in a speaker mode of an intelligent terminal while ensuring service life of the intelligent terminal is an urgent problem to be addressed.

### SUMMARY

Embodiments of this application provide a media processing apparatus and method, to ensure a response speed in a speaker mode of an intelligent terminal while ensuring service life of the intelligent terminal.

According to a first aspect, an embodiment of this application provides a media processing apparatus. The media processing apparatus is applied to an intelligent terminal, and may include a central processing unit CPU, an audio input/output unit, an audio digital signal processor DSP, and a video processing unit. The intelligent terminal includes a low power mode and a speaker mode. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state. When the intelligent terminal is in the low power mode, the CPU is configured to receive a first voice instruction through the audio input/output unit; and the CPU is further configured to: in response to the first voice instruction, control the intelligent terminal to switch from the low power mode to the speaker mode.

In the embodiment provided in the first aspect, when the intelligent terminal is in the low power mode, the central processing unit (Central Processing Unit, CPU) and the audio input/output unit are in the on state, and the audio digital signal processor (Digital signal processor, DSP) and the video processing unit are in the off state, so that the audio input/output unit receives user speech (for example, the first voice instruction) when the intelligent terminal is in the low power mode; and in the speaker mode, the CPU, the audio input/output unit, and the audio DSP are in an on state, and the video processing unit is in an off state, so that when the intelligent terminal is in the speaker mode, the CPU wakes up the audio DSP, and then the audio DSP responds to user speech and plays audio. In the low power mode, the CPU is in the on state (the CPU is not powered off), and the CPU wakes up a related logic module and software process, and controls the intelligent terminal to switch from the low power mode to the speaker mode. Different from the conventional technology, in this embodiment of this application, a wakeup-related function is implemented in the CPU, no dedicated wakeup control unit or wakeup DSP needs to be added, and no wakeup control unit needs to be integrated into an MCU to wake up a related logic module and software process. This eliminates costs of purchasing a dedicated wakeup DSP or a dedicated controller in terms of hardware, and simplifies a hardware circuit of the media processing apparatus. In addition, in the low power state, the CPU is partially turned on, and is not completely powered off. Therefore, in terms of a response speed, in this embodiment of this application, a response speed after a voice instruction is received is higher than a response speed in the conventional technology in which a CPU is in an off state and is woken up by a wakeup control unit after a voice instruction is received. In addition, only a software process related to voice wakeup is enabled in the CPU, and other irrelevant software processes are in a disabled state. Therefore, overall power consumption of the intelligent terminal in this embodiment of this application is lower than that in the conventional technology in which all software processes in the CPU are enabled. In this embodiment of this application, the overall power consumption can be kept at approximately 1.5 W, without affecting service life of the CPU and the intelligent terminal. That is, in different modes, some hardware logic modules related to a mode function in the media processing apparatus are turned on, and other hardware logic modules irrelevant to the mode function are in an off state. Compared with a manner in which all hardware logic modules are turned on, in a manner in which some hardware logic modules are turned off, power consumption of the intelligent terminal can be reduced, to ensure service life of the intelligent terminal. In addition, compared with a manner in which all hardware logic modules are turned off, in a manner in which some hardware logic modules are turned on, a response speed of the intelligent terminal can be increased when the intelligent terminal receives a related voice instruction, so that user experience is improved. In addition, different from a standby mode in the conventional technology, the speaker mode mentioned in this embodiment of this application is a new mode between the low power mode and the on mode. When the intelligent terminal is in the speaker mode, on a premise that a voice instruction of a user can be received and audio can be played, some hardware logic modules irrelevant to a mode function are turned off, to reduce power consumption of the intelligent terminal as much as possible. In addition, because some hardware logic modules are retained, a speed of switching the intelligent terminal from the speaker mode to the on mode is greatly increased. Therefore, in this embodiment of this application, a response speed of the intelligent terminal is ensured while service life of the intelligent terminal is ensured.

In a possible implementation, the CPU is specifically configured to: in response to the first voice instruction, wake up the audio DSP, and turn on an audio player, to control the intelligent terminal to switch from the low power mode to the speaker mode.

During implementation of this embodiment of this application, in response to the first voice instruction, the audio DSP is woken up from an off state to an on state, and the audio player is turned on, to ensure that in the speaker mode, services and processes of the intelligent terminal that are related to smart speech and audio decoding and play are in an operating state. In addition, only the audio DSP and the audio player are turned on, so that the intelligent terminal can quickly respond to the voice instruction and play audio. This ensures a response speed when the intelligent terminal switches from the low power mode to the speaker mode, and improves user experience. In a possible implementation, when the intelligent terminal is in the low power mode, a base operating system and a voice wakeup software process in the CPU are in an enabled state, so that the intelligent terminal can receive a voice instruction.

In this embodiment of this application, in the low power mode, only a software process related to voice wakeup is enabled in the CPU, and other irrelevant software processes are in a disabled state. Therefore, overall power consumption of the intelligent terminal in this embodiment of this application is lower than that in the conventional technology in which all software processes in the CPU are enabled. In this embodiment of this application, the overall power consumption can be kept at approximately 1.5 W, without affecting service life of the CPU and the intelligent terminal. In addition, a software process related to voice wakeup is in an enabled state. This ensures that the intelligent terminal can receive user speech (namely, the first voice instruction) in the low power mode, to meet a user requirement.

In a possible implementation, when the intelligent terminal is in the speaker mode, a software process related to audio decoding and play in the CPU and a DSP software process in the audio DSP are in an enabled state, so that the intelligent terminal can respond to the voice instruction and play audio, where the software process related to audio decoding and play includes a plurality of processes of the following processes: the base operating system, the voice wakeup, speech noise reduction and echo cancellation, speech recognition, and the audio player. The CPU is specifically configured to: in response to the first voice instruction, wake up the DSP software process in the audio DSP, and enable the software process related to audio decoding and play in the CPU, to control the intelligent terminal to switch from the low power mode to the speaker mode.

During implementation of this embodiment of this application, when the intelligent terminal is in the speaker mode, the software process related to audio decoding and play and the DSP software process in the media processing apparatus are in the enabled state, to ensure that the intelligent terminal can respond to the voice instruction and play audio in the speaker mode. In addition, only the audio DSP and the software process related to audio decoding and play are enabled, so that the intelligent terminal can quickly respond to the voice instruction and play audio. This increases a response speed for switching from the low power mode to the speaker mode, and improves user experience.

In a possible implementation, when the intelligent terminal is in the speaker mode, the CPU is further configured to receive a second voice instruction through the audio input/output unit; and the CPU is further configured to: in response to the second voice instruction, control the intelligent terminal to switch from the speaker mode to the low power mode.

During implementation of this embodiment of this application, the audio input/output unit receives user speech (namely, the second voice instruction), to control the intelligent terminal to switch from the speaker mode to the low power mode. This further reduces power consumption of the intelligent terminal. In addition, the user directly switches an operating mode of the intelligent terminal by using a voice instruction. This is convenient and efficient, and greatly improves user experience.

In a possible implementation, when the intelligent terminal is in the speaker mode, the CPU is further configured to: if no audio play service is performed and no voice instruction is received within preset duration, control the intelligent terminal to switch from the speaker mode to the low power mode.

In this embodiment of this application, if the intelligent terminal is in an idle state for a long time in the speaker mode, to save communication resources and extend service life of the intelligent terminal, the media processing apparatus may automatically control the intelligent terminal to switch from the speaker mode to the low power mode, to reduce resource consumption.

In a possible implementation, the CPU is specifically configured to turn off the audio DSP and turn off the audio player, to control the intelligent terminal to switch from the speaker mode to the low power mode.

During implementation of this embodiment of this application, when controlling the intelligent terminal to switch from the speaker mode to the low power mode, the media processing apparatus may disable hardware logic and software processes (for example, the audio DSP and the audio player) that are related to audio play, and retain hardware logic and software processes (for example, the audio input/output unit) that are related to voice receiving, so that the intelligent terminal can normally receive a voice instruction and implement mode switching.

In a possible implementation, the CPU is specifically configured to: disable the DSP software process in the audio DSP, stop the software process related to audio decoding and play in the CPU, and retain the base operating system and the voice wakeup software process in the CPU, to control the intelligent terminal to switch from the speaker mode to the low power mode.

During implementation of this embodiment of this application, when controlling the intelligent terminal to switch from the speaker mode to the low power mode, the media processing apparatus may disable a software process related to audio play, and retain a software process related to voice receiving, so that the intelligent terminal can normally receive a voice instruction and implement mode switching.

In a possible implementation, the intelligent terminal further includes an on mode. In the on mode, the CPU, the audio input/output unit, the audio DSP, and the video processing unit are all in an on state, and a display of the intelligent terminal is in an on state. In the low power mode and the speaker mode, the display of the intelligent terminal is in an off state.

In this embodiment of this application, the intelligent terminal further includes the on mode. In the on mode, the intelligent terminal may keep all hardware logic and software processes (for example, audio-related and video-related hardware logic) in an enabled state, to implement a plurality of functions of the intelligent terminal. In addition, in the low power mode and the speaker mode, the display of the intelligent terminal is in the off state, that is, cannot implement a video play function or the like. In the low power mode mentioned in this embodiment of this application, the intelligent terminal retains only hardware logic and software processes that are related to voice wakeup. Compared with the standby mode in the conventional technology, power consumption is lower. The speaker mode mentioned in this embodiment of this application is a new mode between the low power mode and the on mode. When the intelligent terminal is in the speaker mode, on a premise that a voice instruction of a user can be received and audio can be played, power consumption of the intelligent terminal is reduced as much as possible. In addition, because some hardware logic modules are turned on, a speed of switching the intelligent terminal from the speaker mode to the on mode is greatly increased. In addition, in the speaker mode, because some hardware logic modules are turned on, a speed of switching the intelligent terminal from the low power mode to the speaker mode is greatly increased. In this way, in different modes, related hardware logic and software processes are enabled, and irrelevant hardware logic and software processes are disabled or stopped. This can ensure implementation of different functions of the intelligent terminal, and can also reduce consumption of the intelligent terminal, and ensure service life of the intelligent terminal.

In a possible implementation, when the intelligent terminal is in the on mode, all software processes in the apparatus are in an enabled state, so that the intelligent terminal can respond to the voice instruction and play audio. The software processes include the software process related to audio decoding and play and a software process related to video decoding and display in the CPU, and the DSP software process in the audio DSP. The software process related to video decoding and display includes a plurality of processes of the following processes: the base operating system, video play, video decoding, video processing, and video display.

In this embodiment of this application, in the on mode, all the software processes in the apparatus are in the enabled state, to implement a plurality of functions of the intelligent terminal.

In a possible implementation, when the intelligent terminal is in the speaker mode, the CPU is further configured to: in response to a received first power-on instruction, control the intelligent terminal to switch from the speaker mode to the on mode, where the controlling the intelligent terminal to switch from the speaker mode to the on mode includes: turning on the display, and turning on the video processing unit.

During implementation of this embodiment of this application, in the speaker mode, the intelligent terminal can implement only an audio play requirement of the user, and cannot meet a video play requirement of the user. Therefore, when switching from the speaker mode to the on mode, the intelligent terminal needs to turn on the display and the video processing unit in response to a power-on instruction (namely, the first power-on instruction) of the user, to ensure that the intelligent terminal can play a video to meet a user requirement.

In a possible implementation, the video processing unit includes a plurality of units of a graphics processing unit GPU, a video display unit, a video decoding unit, and a video processing subunit. The CPU is specifically configured to: in response to the first power-on instruction, turn on the display, and turn on the plurality of units of the graphics processing unit GPU, the video display unit, the video decoding unit, and the video processing subunit, to control the intelligent terminal to switch from the speaker mode to the on mode.

During implementation of this embodiment of this application, to meet a video play requirement of the user, when the intelligent terminal switches from the speaker mode to the on mode, in response to the first power-on instruction, the media processing apparatus may turn on the display, and turn on related hardware logic and software processes used for video play, for example, the plurality of units of the graphics processing unit (Graphics Processing Unit, GPU), the video display unit, the video decoding unit, and the video processing subunit.

In a possible implementation, the CPU is specifically configured to enable the software process related to video decoding and display in the CPU, to control the intelligent terminal to switch from the speaker mode to the on mode, where the software process related to video decoding and display includes a plurality of processes of the following processes: the base operating system, video play, video decoding, video processing, and video display.

During implementation of this embodiment of this application, to meet a video play requirement of the user, when the intelligent terminal switches from the speaker mode to the on mode, the media processing apparatus may enable the software process related to video decoding and display in response to the first power-on instruction, to ensure that all software processes in the apparatus are in an enabled state, to meet a user requirement.

In a possible implementation, when the intelligent terminal is in the on mode, the CPU is further configured to: receive a speaker mode switching instruction through the audio input/output unit, and in response to the speaker mode switching instruction, control the intelligent terminal to switch from the on mode to the speaker mode; or receive a sleep instruction through the audio input/output unit, and in response to the sleep instruction, control the intelligent terminal to switch from the on mode to the low power mode.

During implementation of this embodiment of this application, when the intelligent terminal is in the on mode, the user may control, by using a user instruction, the intelligent terminal to switch from the on mode to the low power mode or the speaker mode, and disable or stop an irrelevant logic module and software process, to save device resources.

In a possible implementation, when the intelligent terminal is in the low power mode, the CPU is further configured to: in response to a received second power-on instruction, control the intelligent terminal to switch from the low power mode to the on mode, where the controlling the intelligent terminal to switch from the low power mode to the on mode includes: turning on the display, and turning on the audio DSP and the video processing unit.

During implementation of this embodiment of this application, in the low power mode, the intelligent terminal may receive a voice instruction of the user, and the intelligent terminal is directly controlled to switch from the low power mode to the on mode, to meet a user requirement. For example, when an audio and video play requirement or the like of the user cannot be met, the audio DSP, the display, and the video processing unit are turned on in response to a power-on instruction (namely, the second power-on instruction) of the user, to ensure that the intelligent terminal can play audio and a video.

In a possible implementation, the video processing unit includes a plurality of units of a graphics processing unit GPU, a video display unit, a video decoding unit, and a video processing subunit. The CPU is specifically configured to: in response to the second power-on instruction, turn on the display and the audio DSP, and turn on the plurality of units of the graphics processing unit GPU, the video display unit, the video decoding unit, and the video processing subunit, to control the intelligent terminal to switch from the low power mode to the on mode.

During implementation of this embodiment of this application, to meet a video play requirement of the user, when the intelligent terminal switches from the low power mode to the on mode, the media processing apparatus needs to enable all hardware logic related to audio play and video play, and enable all software processes, for example, the display, the audio DSP, and the plurality of units of the (Graphics Processing Unit, GPU), the video display unit, the video decoding unit, and the video processing subunit.

In a possible implementation, the first power-on instruction and the second power-on instruction are in any one of the following instruction forms: a voice instruction, a button instruction, a remote control instruction, and a touch instruction.

In this embodiment of this application, the first power-on instruction and the second power-on instruction that the intelligent terminal responds to may have a plurality of instruction forms, to facilitate user operations and improve user experience. For example, the first power-on instruction and the second power-on instruction may be one or more of the following: a voice instruction, to be specific, the user may control, through voice, the intelligent terminal to be powered on; a button instruction (for example, the user may press a power-on button on the intelligent terminal to control the intelligent terminal to be powered on); a remote control instruction (for example, the user may operate a remote control matching the intelligent terminal to control the intelligent terminal to be powered on); a touch instruction (for example, the user may touch a touchscreen of the intelligent terminal to control the intelligent terminal to be powered on); and the like.

In a possible implementation, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core corresponding to a case in which the intelligent terminal is in the on mode.

During implementation of this embodiment of this application, the CPU in the intelligent terminal may be a multi-core CPU. The multi-core CPU can improve operation efficiency of the intelligent terminal, but has high power consumption. Therefore, in the low power mode, some CPU cores may be turned off, only some CPU cores are retained, and the operating frequency of the part of CPU cores in the operating state is reduced, to further reduce power consumption of the CPU, and extend service life of the intelligent terminal.

In a possible implementation, when the intelligent terminal is in the low power mode, a voice wakeup process in the CPU is in an enabled state; and when the intelligent terminal is in the speaker mode, an audio decoding and play process in the CPU is in an enabled state.

In this embodiment of this application, in the low power mode, the voice wakeup process in the CPU is kept in the enabled state, that is, the voice wakeup process in the CPU is enabled, so that the user controls, through voice, the intelligent terminal to switch from the low power mode to the speaker mode or the on mode, to reduce operation difficulty of the user. In addition, in the speaker mode, the audio decoding and play process in the CPU is kept in the enabled state, that is, the audio decoding and play process in the CPU is enabled, to ensure normal audio play and meet a user requirement.

In a possible implementation, the apparatus further includes a standby microcontroller unit MCU and a double data rate synchronous dynamic random access memory (Double Data Rate, DDR), and the intelligent terminal further includes an STR standby mode. In the STR standby mode, the CPU, the audio input/output unit, the audio DSP, the video processing unit, and the display are all in an off state, and the standby MCU and the DDR are in an on state.

During implementation of this embodiment of this application, the STR standby mode is a standby state of the intelligent terminal. In the standby state, related logic modules such as the audio input/output unit, the video processing unit, and the CPU in the media processing apparatus are in an off state, and the double rate synchronous dynamic random access memory (Double Data Rate, DDR) and the standby MCU are in the on state. The standby MCU is in the on state, and may receive a power-on instruction. The power-on instruction is in a remote control or button instruction form, and may control the intelligent terminal to switch to the on mode. In addition, because the DDR is in the on state, a data loss can be prevented in a self-refresh state. After the standby MCU receives a power-on instruction and controls the intelligent terminal to be powered on again, the intelligent terminal can quickly resume a state available before the power-on. A response to power-on is fast, so that user experience is improved.

In a possible implementation, the intelligent terminal further includes a passive standby mode. In the passive standby mode, the CPU, the audio input/output unit, the audio DSP, the video processing unit, the display, and the DDR are all in an off state, and the standby MCU is in an on state.

During implementation of this embodiment of this application, the passive standby mode is a standby state of the intelligent terminal. In the passive standby mode, all logic modules other than the standby MCU in the intelligent terminal are in an off state, and only the standby MCU is in the on state. The standby MCU performs only a simple standby-related function, for example, receives and processes a remote control event, a keypad event, and the like of the intelligent terminal in the standby state, and is not integrated with a control unit that supports audio input, local speech recognition, and wakeup processing. This greatly reduces power consumption of the intelligent terminal in the standby state.

According to a second aspect, an embodiment of this application provides a media processing method, applied to an intelligent terminal. The intelligent terminal includes a central processing unit CPU, an audio input/output unit, an audio digital signal processor DSP, and a video processing unit. The intelligent terminal includes a low power mode and a speaker mode. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state. The method includes: When the intelligent terminal is in the low power mode, the CPU receives a first voice instruction through the audio input/output unit; and the CPU controls, in response to the first voice instruction, the intelligent terminal to switch from the low power mode to the speaker mode.

In a possible implementation, that the CPU controls, in response to the first voice instruction, the intelligent terminal to switch from the low power mode to the speaker mode includes: The CPU wakes up the audio DSP and turns on an audio player in response to the first voice instruction, so that the intelligent terminal switches from the low power mode to the speaker mode.

In a possible implementation, the method further includes: When the intelligent terminal is in the speaker mode, the CPU receives a second voice instruction through the audio input/output unit; and the CPU controls, in response to the second voice instruction, the intelligent terminal to switch from the speaker mode to the low power mode.

In a possible implementation, the method further includes: When the intelligent terminal is in the speaker mode, if no audio play service is performed and no voice instruction is received within preset duration, the CPU controls the intelligent terminal to switch from the speaker mode to the low power mode.

In a possible implementation, the controlling the intelligent terminal to switch from the speaker mode to the low power mode includes: The CPU turns off the audio DSP and turns off the audio player, so that the intelligent terminal switches from the speaker mode to the low power mode. In a possible implementation, the intelligent terminal further includes an on mode. In the on mode, the CPU, the audio input/output unit, the audio DSP, and the video processing unit are all in an on state, and a display of the intelligent terminal is in an on state. In the low power mode and the speaker mode, the display of the intelligent terminal is in an off state.

In a possible implementation, the method further includes: When the intelligent terminal is in the speaker mode, the CPU turns on the display and turns on the video processing unit in response to a received first power-on instruction, to control the intelligent terminal to switch from the speaker mode to the on mode.

In a possible implementation, the video processing unit includes a plurality of units of a graphics processing unit GPU, a video display unit, a video decoding unit, and a video processing subunit. That the CPU turns on the display and turns on the video processing unit in response to a received first power-on instruction includes: in response to the first power-on instruction, turning on the display, and turning on the plurality of units of the graphics processing unit GPU, the video display unit, the video decoding unit, and the video processing subunit, to control the intelligent terminal to switch from the speaker mode to the on mode.

In a possible implementation, the method further includes: When the intelligent terminal is in the on mode, the CPU receives a speaker mode switching instruction through the audio input/output unit, and in response to the speaker mode switching instruction, controls the intelligent terminal to switch from the on mode to the speaker mode; or when the intelligent terminal is in the on mode, the CPU receives a sleep instruction through the audio input/output unit, and in response to the sleep instruction, controls the intelligent terminal to switch from the on mode to the low power mode.

In a possible implementation, the method further includes: When the intelligent terminal is in the low power mode, the CPU turns on the display and turns on the audio DSP and the video processing unit in response to a received second power-on instruction, to control the intelligent terminal to switch from the low power mode to the on mode.

In a possible implementation, the video processing unit includes a plurality of units of a graphics processing unit GPU, a video display unit, a video decoding unit, and a video processing subunit. That the CPU turns on the display and turns on the audio DSP and the video processing unit in response to a received second power-on instruction includes: in response to the second power-on instruction, turning on the display and the audio DSP, and turning on the plurality of units of the graphics processing unit GPU, the video display unit, the video decoding unit, and the video processing subunit, to control the intelligent terminal to switch from the speaker mode to the on mode.

In a possible implementation, the first power-on instruction and the second power-on instruction are in any one of the following instruction forms: a voice instruction, a button instruction, a remote control instruction, and a touch instruction.

In a possible implementation, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core in the on mode.

In a possible implementation, when the intelligent terminal is in the low power mode, a voice wakeup process in the CPU is in an enabled state; and when the intelligent terminal is in the speaker mode, an audio decoding and play process in the CPU is in an enabled state.

According to a third aspect, an embodiment of this application provides a media processing apparatus, applied to an intelligent terminal. The intelligent terminal includes a central processing unit CPU, an audio input/output unit, an audio digital signal processor DSP, and a video processing unit. The intelligent terminal includes a low power mode and a speaker mode. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state. The apparatus includes: a first receiving unit, configured to receive a first voice instruction when the intelligent terminal is in the low power mode; and a first switching unit, configured to: in response to the first voice instruction, control the intelligent terminal to switch from the low power mode to the speaker mode.

In a possible implementation, the first switching unit is specifically configured to: in response to the first voice instruction, wake up the audio DSP, and turn on an audio player, to control the intelligent terminal to switch from the low power mode to the speaker mode.

In a possible implementation, the apparatus further includes: a second receiving unit, configured to receive a second voice instruction when the intelligent terminal is in the speaker mode; and a second switching unit, configured to: in response to the second voice instruction, control the intelligent terminal to switch from the speaker mode to the low power mode.

In a possible implementation, the apparatus further includes: a third switching unit, configured to: when the intelligent terminal is in the speaker mode, if no audio play service is performed and no voice instruction is received within preset duration, control the intelligent terminal to switch from the speaker mode to the low power mode.

In a possible implementation, the second switching unit is specifically configured to turn off the audio DSP and turn off the audio player, to control the intelligent terminal to switch from the speaker mode to the low power mode.

In a possible implementation, the intelligent terminal further includes an on mode. In the on mode, the CPU, the audio input/output unit, the audio DSP, and the video processing unit are all in an on state, and a display of the intelligent terminal is in an on state. In the low power mode and the speaker mode, the display of the intelligent terminal is in an off state.

In a possible implementation, the apparatus further includes a fourth switching unit, configured to: when the intelligent terminal is in the speaker mode, turn on the display and turn on the video processing unit in response to a received first power-on instruction, to control the intelligent terminal to switch from the speaker mode to the on mode.

In a possible implementation, the apparatus further includes a fifth switching unit. The fifth switching unit is configured to: when the intelligent terminal is in the on mode, receive a speaker mode switching instruction, and in response to the speaker mode switching instruction, control the intelligent terminal to switch from the on mode to the speaker mode; or when the intelligent terminal is in the on mode, receive a sleep instruction, and in response to the sleep instruction, control the intelligent terminal to switch from the on mode to the low power mode.

In a possible implementation, the apparatus further includes a sixth switching unit 108. The sixth switching unit 108 is configured to: when the intelligent terminal is in the low power mode, turn on the display and turn on the audio DSP and the video processing unit in response to a received second power-on instruction, to control the intelligent terminal to switch from the low power mode to the on mode.

In a possible implementation, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core in the on mode.

In a possible implementation, when the intelligent terminal is in the low power mode, a voice wakeup process in the CPU is in an enabled state; and when the intelligent terminal is in the speaker mode, an audio decoding and play process in the CPU is in an enabled state.

According to a fourth aspect, an embodiment of this application provides a mode switching control method. The method is applied to an intelligent terminal, and the intelligent terminal includes a low power mode, a speaker mode, and an on mode. In the low power mode, the intelligent terminal retains hardware logic and software processes that are related to voice wakeup, so that the intelligent terminal can receive a voice instruction. In the speaker mode, the intelligent terminal retains hardware logic and software processes that are related to audio decoding and play, so that the intelligent terminal can respond to the voice instruction and play audio. In the on mode, the intelligent terminal retains a software process related to video decoding and display, so that the intelligent terminal can play a video. The method includes: when the intelligent terminal is in the low power mode, receiving a first control instruction and switching from the low power mode to the speaker mode, or receiving a second control instruction and switching from the low power mode to the on mode; when the intelligent terminal is in the speaker mode, receiving a third control instruction and switching from the speaker mode to the low power mode, or receiving a fourth control instruction and switching from the speaker mode to the on mode; and when the intelligent terminal is in the on mode, receiving a fifth control instruction and switching from the on mode to the speaker mode, or receiving a sixth control instruction and switching from the on mode to the low power mode.

During implementation of the embodiment in the fourth aspect, the intelligent terminal may randomly switch between the low power mode, the speaker mode, and the on mode. In the low power mode mentioned in this embodiment of this application, the intelligent terminal retains only hardware logic and software processes that are related to voice wakeup. Compared with the standby mode in the conventional technology, power consumption is lower. In addition, the speaker mode mentioned in this embodiment of this application is a new mode between the low power mode and the on mode. When the intelligent terminal is in the speaker mode, on a premise that a voice instruction of a user can be received and audio can be played, power consumption of the intelligent terminal is reduced as much as possible. In addition, because some hardware logic modules are turned on, a speed of switching the intelligent terminal from the speaker mode to the on mode is greatly increased. In addition, in the speaker mode, because some hardware logic modules are turned on, a speed of switching the intelligent terminal from the low power mode to the speaker mode is greatly increased. In this way, in different modes, related hardware logic and software processes are enabled, and irrelevant hardware logic and software processes are disabled or stopped. This increases a response speed for switching between different modes, reduces power consumption as much as possible, and extends service life of the intelligent terminal while meeting a requirement of the user for a plurality of functions of the intelligent terminal.

In a possible implementation, the intelligent terminal includes a central processing unit CPU, an audio input/output unit, an audio digital signal processor DSP, and a video processing unit. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state. In the on mode, the CPU, the audio input/output unit, the audio DSP, and the video processing unit are all in an on state, and a display of the intelligent terminal is in an on state. In the low power mode and the speaker mode, the display of the intelligent terminal is in an off state.

In a possible implementation, the receiving a first control instruction and switching from the low power mode to the speaker mode includes: receiving the first control instruction, and waking up the audio DSP and turning on an audio player in response to the first control instruction, so that the intelligent terminal switches from the low power mode to the speaker mode.

In a possible implementation, the receiving a second control instruction and switching from the low power mode to the on mode includes: receiving the second control instruction, and turning on the display and turning on the audio DSP and the video processing unit in response to the second control instruction, to control the intelligent terminal to switch from the low power mode to the on mode.

In a possible implementation, the receiving a third control instruction and switching from the speaker mode to the low power mode includes: receiving the third control instruction, and turning off the audio DSP in response to the third control instruction, to control the intelligent terminal to switch from the speaker mode to the low power mode.

In a possible implementation, the receiving a fourth control instruction and switching from the speaker mode to the on mode includes: receiving the fourth control instruction, and turning on the display and turning on the video processing unit in response to the fourth control instruction, to control the intelligent terminal to switch from the speaker mode to the on mode.

In a possible implementation, the receiving a fifth control instruction and switching from the on mode to the speaker mode includes: receiving the fifth control instruction, and turning off the display and turning off the video processing unit in response to the fifth control instruction, to control the intelligent terminal to switch from the on mode to the speaker mode.

In a possible implementation, the receiving a sixth control instruction and switching from the on mode to the low power mode includes: receiving the sixth control instruction, and turning off the display, the audio DSP, and the video processing unit in response to the sixth control instruction, to control the intelligent terminal to switch from the on mode to the low power mode.

In a possible implementation, the second control instruction, the fourth control instruction, the fifth control instruction, and the sixth control instruction are in any one of the following instruction forms: a voice instruction, a button instruction, a remote control instruction, and a touch instruction. In a possible implementation, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core in the on mode.

According to a fifth aspect, an embodiment of this application provides an intelligent terminal. The intelligent terminal includes a low power mode, a speaker mode, and an on mode. The intelligent terminal includes the media processing apparatus provided in the first aspect, so that the media processing apparatus controls the intelligent terminal to switch between the low power mode, the speaker mode, and the on mode.

According to a sixth aspect, an embodiment of this application provides another intelligent terminal. The intelligent terminal includes a low power mode, a speaker mode, and an on mode. The intelligent terminal includes the media processing apparatus provided in the first aspect, so that the media processing apparatus is configured to enable the intelligent terminal to implement a corresponding function in the media processing method provided in the second aspect, or enable the intelligent terminal to implement the mode switching control method provided in the fourth aspect. The intelligent terminal may further include a memory. The memory is coupled to the media processing apparatus, and stores program instructions and data that are necessary for the intelligent terminal. The intelligent terminal may further include a communication interface, used for communication between the intelligent terminal and another terminal or a communication network.

According to a seventh aspect, an embodiment of this application provides a computer-readable storage medium. The computer-readable storage medium stores a computer program. When the computer program is executed by a computer or a processor, the media processing method provided in the second aspect or the mode switching control method provided in the fourth aspect is implemented.

According to an eighth aspect, an embodiment of this application provides a computer program product. The computer program product includes a computer program. When the computer program is executed by a computer or a processor, the computer or the processor is enabled to perform the media processing method provided in the second aspect, or implement the mode switching control method provided in the fourth aspect.

### BRIEF DESCRIPTION OF DRAWINGS

To describe technical solutions in embodiments of this application or in the background more clearly, the following describes accompanying drawings used in embodiments of this application or in the background.
FIG. 1 is a schematic diagram of a structure of an intelligent terminal according to an embodiment of this application;
FIG. 2 is a schematic diagram of a structure of a media processing apparatus according to an embodiment of this application;
FIG. 3 is a schematic diagram of related software processes in the media processing apparatus shown in FIG. 2 according to an embodiment of this application;
FIG. 4 is a schematic diagram of a structure of another media processing apparatus according to an embodiment of this application;
FIG. 5 is a schematic diagram of a structure of still another media processing apparatus according to an embodiment of this application;
FIG. 6 is a schematic diagram of a system framework of an intelligent terminal in three modes according to an embodiment of this application;
FIG. 7 is a schematic diagram of a structure of a media processing apparatus in a low power mode according to an embodiment of this application;
FIG. 8 is a schematic diagram of related software processes in a media processing apparatus in a low power mode according to an embodiment of this application;
FIG. 9 is a schematic diagram of a structure of a media processing apparatus in a speaker mode according to an embodiment of this application;
FIG. 10 is a schematic diagram of related software processes in a media processing apparatus in a speaker mode according to an embodiment of this application;
FIG. 11 is a schematic diagram of a structure of a media processing apparatus in an on mode according to an embodiment of this application;
FIG. 12 is a schematic diagram of related software processes in a media processing apparatus in an on mode according to an embodiment of this application;
FIG. 13 is a schematic flowchart of a media processing method according to an embodiment of this application;
FIG. 14 is a schematic diagram of a scenario in an application scenario according to an embodiment of this application;
FIG. 15 is a schematic diagram of a control end with a speaker mode according to an embodiment of this application;
FIG. 16 is a schematic diagram of another control end with a speaker mode according to an embodiment of this application; and
FIG. 17 is a schematic diagram of a structure of still another media processing apparatus according to an embodiment of this application.

### DESCRIPTION OF EMBODIMENTS

The following describes embodiments of this application with reference to accompanying drawings in embodiments of this application.

In the specification, claims, and accompanying drawings of this application, the terms "first", "second", "third", "fourth", "fifth", and "sixth" and the like are intended to distinguish between different objects, but not to indicate a specific order. In addition, the terms "comprise", "include", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one" means one or more, and "a plurality of" means two or more. The term "and/or" describes an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items" or a similar expression thereof indicates any combination of the items, including one of the items or any combination of a plurality of the items. For example, at least one of a, b, or c may indicate a, b, c, "a and b", "a and c", "b and c", or "a, b, and c", where a, b, and c may be singular or plural.

An "embodiment" mentioned in this specification means that a specific feature, structure, or characteristic described with reference to the embodiment may be included in at least one embodiment of this application. The phrase appearing in various locations in this specification does not necessarily mean a same embodiment, and neither means an independent or alternative embodiment mutually exclusive with another embodiment. It is explicitly and implicitly understood by persons skilled in the art that embodiments described in this specification may be combined with another embodiment.

The terms "component", "module", and "system" and the like used in this specification indicate a computer-related entity, hardware, firmware, a combination of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may perform communication by using a local process and/or a remote process and based on, for example, a signal with one or more data packets (for example, data from two components interacting with another component in a local system, a distributed system, and/or across a network such as the Internet interacting with other systems by using the signal).

First, for ease of understanding embodiments of this application, the following first describes an intelligent terminal on which embodiments of this application are based.

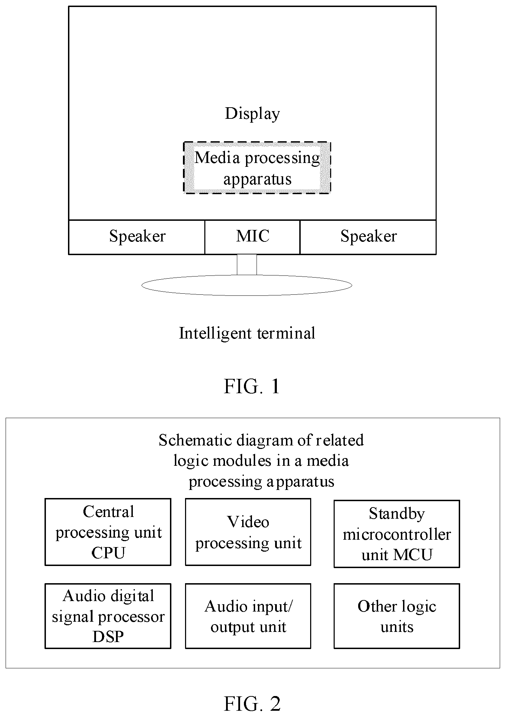

FIG. 1 is a schematic diagram of a structure of an intelligent terminal according to an embodiment of this application. As shown in FIG. 1, the intelligent terminal is a terminal device with a smart speech function. For example, a user may control, through a voice conversation with the intelligent terminal, the intelligent terminal to perform video play, music play, content search, voice interaction, and the like. This greatly enriches interaction operations of the intelligent terminal. In addition, the intelligent terminal in a screen-off state (to be specific, a display is in an off state) may further serve as an intelligent speaker. To be specific, when the display is off, the intelligent terminal may be woken up by user speech, to perform audio play and other voice interaction.

In this embodiment of this application, the intelligent terminal includes an on mode, a speaker mode, and a low power mode. In the low power mode, the intelligent terminal retains hardware logic and software processes that are related to voice wakeup, so that the intelligent terminal can receive a voice instruction. That is, in the low power mode, the intelligent terminal can receive user speech. For example, the intelligent terminal receives the user speech "Hey, Xiaohua". In the speaker mode, the intelligent terminal retains hardware logic and software processes that are related to audio decoding and play, so that the intelligent terminal can reply to user speech and play audio. That is, in the speaker mode, after receiving user speech, the intelligent terminal may play audio or perform a voice reply in response to the user speech. For example, the intelligent terminal receives the user speech "Hey Xiaohua", and then may perform voice interaction based on keyword information in the user speech, to reply to the user with "How can I help you?" In the on mode, the intelligent terminal retains hardware logic and software processes that are related to video decoding and display, so that the intelligent terminal can play a video. That is, in the on mode, the intelligent terminal may play audio and a video according to a user requirement. For example, after receiving an instruction of a user for playing a video A, the intelligent terminal may play the video A on the display.

In addition, the intelligent terminal includes the display and a media processing apparatus, and may further include at least one speaker and at least one microphone (Microphone, MIC) array. The display is configured to display an image. For example, the intelligent terminal may perform a task, such as video play or image display, on the display.

The media processing apparatus is configured to control the intelligent terminal to play audio and a video, and control the intelligent terminal to switch between the on mode, the speaker mode, and the low power mode. For example, the media processing apparatus controls the display of the intelligent terminal to be turned on or turned off, and controls the intelligent terminal to perform video play, music play, content search, voice interaction, and the like. It should be noted that, for a specific manner of controlling, by the media processing apparatus, the intelligent terminal to switch between the three modes, that is, the on mode, the speaker mode, and the low power mode, reference may be made to related descriptions in the following embodiments. Details are not described in this embodiment of this application. In addition, in an optional case, the media processing apparatus is located on a circuit board at the rear of the display of the intelligent terminal, or in a chip inside the intelligent terminal.

The speaker is configured to play audio. For example, the intelligent terminal may perform audio play or voice interaction by using the speaker.

The microphone array (Microphone Array) is configured to receive audio. The microphone array includes a specific quantity of acoustic sensors (usually microphones) and is an apparatus for sampling and processing spatial characteristics of a sound field. For example, the microphone array receives a voice instruction or other audio input. In this embodiment of this application, the intelligent terminal may receive a voice instruction of the user by using the microphone array, so that the intelligent terminal implements video play, music play, content search, voice interaction, and the like. In addition, when the intelligent terminal is a television, a far-field sound pickup microphone array of the television usually includes four to six microphone arrays.

The intelligent terminal shown in FIG. 1 may be various terminal devices with a smart speaker function, for example, a television, a set-top box, a computer, or a vehicle-mounted computer. This is not particularly limited in this embodiment of this application.

It can be understood that the schematic diagram of the intelligent terminal in FIG. 1 is merely an example implementation in embodiments of this application, and the intelligent terminal in embodiments of this application includes but is not limited to the foregoing structure.

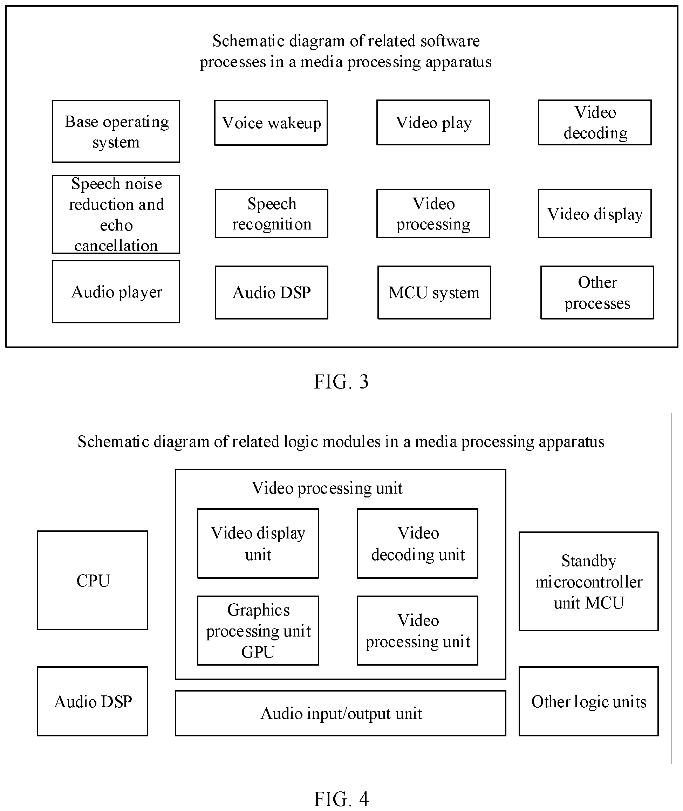

Based on the intelligent terminal shown in FIG. 1, the following describes a media processing apparatus on which embodiments of this application are based. FIG. 2 is a schematic diagram of a structure of a media processing apparatus according to an embodiment of this application. FIG. 3 is a schematic diagram of related software processes in the media processing apparatus shown in FIG. 2 according to an embodiment of this application.

The media processing apparatus shown in FIG. 2 may be applied to an intelligent terminal (for example, the intelligent terminal shown in FIG. 1), and may include a central processing unit CPU, an audio input/output unit (which may also be referred to as an audio input/output hardware circuit), an audio digital signal processor DSP, and a video processing unit (which may also be referred to as a video processor). It should be understood that the audio input/output unit is a hardware circuit for implementing audio input/output, and the video processing unit is a hardware circuit for implementing a video processing-related algorithm. The media processing apparatus may further include a standby MCU and other logic units. In addition, as shown in FIG. 2, related software processes based on the hardware logic in the media processing apparatus shown in FIG. 1 include the following plurality of processes: a base operating system, voice wakeup, speech noise reduction and echo cancellation, speech recognition, an audio player, video play, video decoding, video processing, video display, DSP software in the audio DSP, a standby software system in the standby MCU, and other service processes. In addition, an "audio DSP" shown in FIG. 3 represents the DSP software in the audio DSP, and an "MCU system" shown in FIG. 3 represents the standby software system in the standby MCU.

A base system, namely, the base operating system, is configured to support various software process management, a graphics system, remote control event processing, and the like. The speech noise reduction and echo cancellation are configured to cancel noise and echo of an audio signal. The voice wakeup is configured to recognize a voice wakeup word, for example, extract a keyword from user speech to wake up a related logic module. The speech recognition is configured to perform local semantic parsing on smart speech or interaction between cloud-side parsing and device-side parsing, for example, analyze user speech and extract text information from the user speech. The audio DSP is configured to perform sound effect processing, such as blending, mixing, and tuning, on an audio signal. The audio player is an installed third-party audio play application, and may be used for software decoding for information in an audio format. The video decoding is a video decoding driver for decoding a video. The video play is a local or installed third-party video play application for playing a video. The video processing is a video processing driver. The video display is a video display driver. The MCU system is a standby management program running on the standby MCU. The other processes are programs within description ranges of other related service functions. For example, the other processes may be software processes related to a video call, a somatic game, and other functions in the intelligent terminal.

In addition, the central processing unit CPU is configured to run the base operating system to ensure normal operation of the intelligent terminal, and drive some or all software processes in the media processing apparatus to perform services such as audio and video play. Specifically, as shown in FIG. 2, service software processes related to the base operating system, the voice wakeup, the speech noise reduction and echo cancellation, the speech recognition, the audio player, the video play, the video processing, the video decoding, the video display, and the like run in the CPU. For example, when the intelligent terminal is in the low power mode, the CPU retains a software process related to voice wakeup, so that the intelligent terminal can receive a voice instruction through the audio input/output unit. For example, the software process related to voice wakeup includes a voice wakeup software process. When the intelligent terminal is in the speaker mode, the CPU retains a software process related to audio decoding and play, so that the intelligent terminal can respond to the voice instruction and play audio. For example, the software process related to audio decoding and play includes the speech noise reduction and echo cancellation, the speech recognition, the audio player, and the like. When the intelligent terminal is in the on mode, the CPU enables all software processes in the media processing apparatus. For example, the CPU enables a software process related to video decoding and display, so that the intelligent terminal can play a video. In the on mode, the CPU may implement speech recognition on user speech, obtain audio information, and obtain video information, to implement service processes such as the base operating system, the voice wakeup, the audio decoding and play, and the video play. For example, the CPU may wake up a related logic module such as the audio DSP and/or the video processing unit in response to a user instruction, and control the intelligent terminal to switch between the three modes: the on mode, the speaker mode, and the low power mode. For a specific switching manner, refer to the following embodiments. Details are not described in this embodiment of this application. In addition, the user instruction may be in any one of the following instruction forms: a voice instruction, a button instruction, a remote control instruction, a touch instruction, or the like.

Optionally, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core corresponding to a case in which the intelligent terminal is in the on mode. The CPU in the intelligent terminal may be a multi-core CPU. The multi-core CPU can improve operation efficiency of the intelligent terminal. In addition, in the low power mode, some CPU cores may be turned off, other CPU cores are retained, and the operating frequency of the part of CPU cores in the operating state is reduced, to reduce power consumption of the CPU, and extend service life of the intelligent terminal. FIG. 4 is a schematic diagram of a structure of another media processing apparatus according to an embodiment of this application. As shown in FIG. 4, a CPU in the media processing apparatus is a multi-core CPU. In the low power mode, only one CPU core is kept in an on state, and a remaining CPU core is in an off state. In addition, an operating frequency of the CPU core is less than an operating frequency of a CPU core in the on mode.

It should be noted that turning off a logic module (for example, the CPU, an audio input/output unit, an audio DSP, and a video processing unit), or stopping a logic module, or that a logic module in an off state in this embodiment of this application is equivalent to disabling a clock corresponding to the logic module, or equivalent to powering off the logic module. Turning on or waking up a logic module or that a logic module is in an on state, an operating state, or the like in this embodiment of this application is equivalent to enabling a clock corresponding to the logic module, or equivalent to powering on the logic module. In addition, when a logic module is turned on, a software process corresponding to the logic module is also enabled. Correspondingly, when the logic module is turned off, the software process corresponding to the logic module is also stopped. For example, when the video processing unit is turned off, a software process that is related to video decoding and display and that corresponds to the video processing unit is also stopped. It should be further noted that related descriptions of disabling a software process (for example, a base operating system, voice wakeup, speech noise reduction and echo cancellation, or speech recognition) or that a software process is in a disabled state or the like in this embodiment of this application are equivalent to stopping the software process; and related descriptions of enabling a software process, or that a software process is in an enabled state, or that a software process is in an operating state, or that a software process is in a running state, or the like in this embodiment of this application are equivalent to starting the software process.

The audio input/output unit is configured to receive audio input (for example, a user voice instruction or other audio input), or output audio (for example, perform a voice reply for the intelligent terminal or play a song). For example, in the on mode, the speaker mode, or the low power mode, the audio input/output unit may receive a user voice instruction; and in the on mode or the speaker mode, the audio input/output unit may output voice reply audio, song play audio, or the like. It should be noted that audio input and output may be implemented by one hardware circuit or a related functional unit, or may be implemented by different hardware circuits or related functional units. This is not specifically limited in this application.

Optionally, an audio input part in the audio input/output unit is connected to the microphone array shown in FIG. 1, and an audio output part is connected to the speaker shown in FIG. 1.

The audio digital signal processor DSP is an audio processor for performing functions such as sound mixing and volume adjustment. As shown in FIG. 2, a service software process related to the audio DSP runs in the audio DSP. The audio DSP is in an off state in the low power mode, and is in an on state in the speaker mode or the on mode. For example, when the CPU recognizes a user instruction and needs to control the intelligent terminal to switch from the low power mode to the speaker mode or the on mode, the CPU may wake up the audio DSP to an operating state, to perform operations such as sound mixing and volume adjustment on an audio signal that needs to be output. For another example, when the intelligent terminal outputs any audio through the speaker, the audio DSP needs to perform processing such as sound effect adjustment and volume adjustment on a to-be-output audio signal, and output a processed audio signal through the audio input/output unit.

The video processing unit is configured to convert an obtained image signal into a signal that can be normally displayed on the display. For example, the video processing unit performs related processing such as decoding, graphics rendering and drawing, image quality processing, video format conversion, and resolution specification conversion on the obtained image signal. It should be noted that the video processing unit may be implemented by using a related hardware circuit in the media processing apparatus. This is not specifically limited in this application.

Optionally, the video processing unit may further include a plurality of units of a graphics processing unit (Graphics Processing Unit, GPU), a video display unit, a video decoding unit, and a video processing subunit. It can be understood that, when playing a video, the intelligent terminal needs to convert an obtained image signal into a video signal that can be normally played on the display. Therefore, to improve operation efficiency and accuracy, the video processing unit may include a plurality of logic modules or related functional units to implement corresponding functions. The GPU, the video display unit, the video decoding unit, and the video processing subunit may be hardware logic modules in the video processing unit.

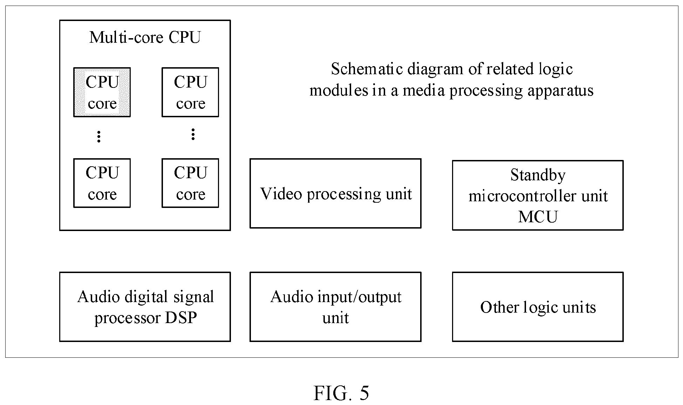

FIG. 5 is a schematic diagram of a structure of still another media processing apparatus according to an embodiment of this application. As shown in FIG. 5, a video processing unit includes a plurality of units of a graphics processing unit GPU, a video display unit, a video decoding unit, and a video processing subunit. The graphics processing unit GPU is used for graphics rendering and drawing. The video decoding unit is used for decoding for various video formats. The video processing subunit is used for image processing such as video format conversion, zooming, and image quality processing. The video display unit is configured to drive displaying of video data on the display, various interface screens, a video output unit, or other modules.

In addition, the video processing unit and a related logic module or a related functional unit in the video processing unit are in an on state only in the on mode. In the speaker mode or the on mode, the video processing unit and the related logic module or the related functional unit in the video processing unit are all in an off state.

A standby MCU is configured to receive and process a remote control event, a keypad event, and the like of the intelligent terminal in a standby state. The standby MCU may include an indicator control unit, a receiving unit for receiving a remote control instruction or a button instruction, and a processing unit for a standby-related function such as timing wakeup or clock wakeup. As shown in FIG. 2, a service software process related to an MCU system runs in the standby MCU, for example, a standby management program runs in the standby MCU in the standby state. In this embodiment of this application, when the intelligent terminal is in the standby state (the low power mode or the speaker mode), the standby MCU may control a standby indicator to be turned on, to indicate that the intelligent terminal is in the standby state. The standby MCU may further receive a remote control instruction sent by a remote control or a button instruction received by the keypad, to control the intelligent terminal to switch to the on mode.

It should be noted that, in this embodiment of this application, when the intelligent terminal is in the low power mode or the speaker mode, in response to a remote control instruction sent by a remote control, the CPU may control, through the standby MCU, the intelligent terminal to switch to the on mode. That is, the standby MCU is in an on state when the intelligent terminal is in the low power mode or the speaker mode. In addition, the standby MCU is not integrated with a control unit that supports audio input, local speech recognition, and wakeup processing, and performs only a standby-related function, so that hardware costs are reduced.

It should be noted that, for turning on or turning off the functional units and the logic modules in the media processing apparatus described in this embodiment of this application, and controlling mode switching of the intelligent terminal, reference may be made to related descriptions in the following embodiments. Details are not described herein.

It should be noted that the media processing apparatus mentioned in embodiments of this application may be a chip, a control apparatus, a processing module, or the like. A specific form of the media processing apparatus is not specifically limited in this application.

It should be further noted that the schematic diagrams of the structures of the media processing apparatuses in FIG. 2, FIG. 4, and FIG. 5 are merely several example implementations in embodiments of this application. The media processing apparatus in embodiments of this application includes but is not limited to the foregoing several structures.

Based on the intelligent terminal shown in FIG. 1, the media processing apparatus shown in FIG. 2, and the related software processes in the media processing apparatus that are shown in FIG. 3, the following describes on/off statuses of related logic modules in the media processing apparatus and the related software processes in the media processing apparatus when the intelligent terminal is in the three modes.

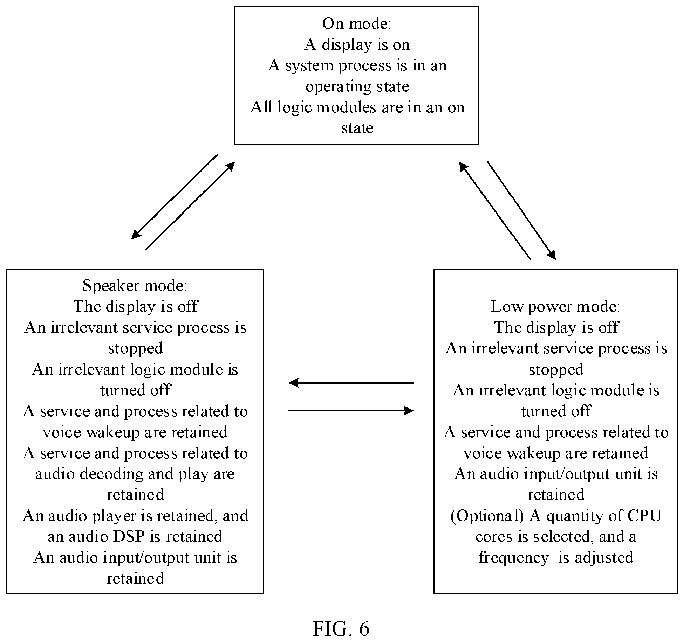

FIG. 6 is a schematic diagram of a system framework of an intelligent terminal in three modes according to an embodiment of this application. As shown in FIG. 6:

### In the low power mode:

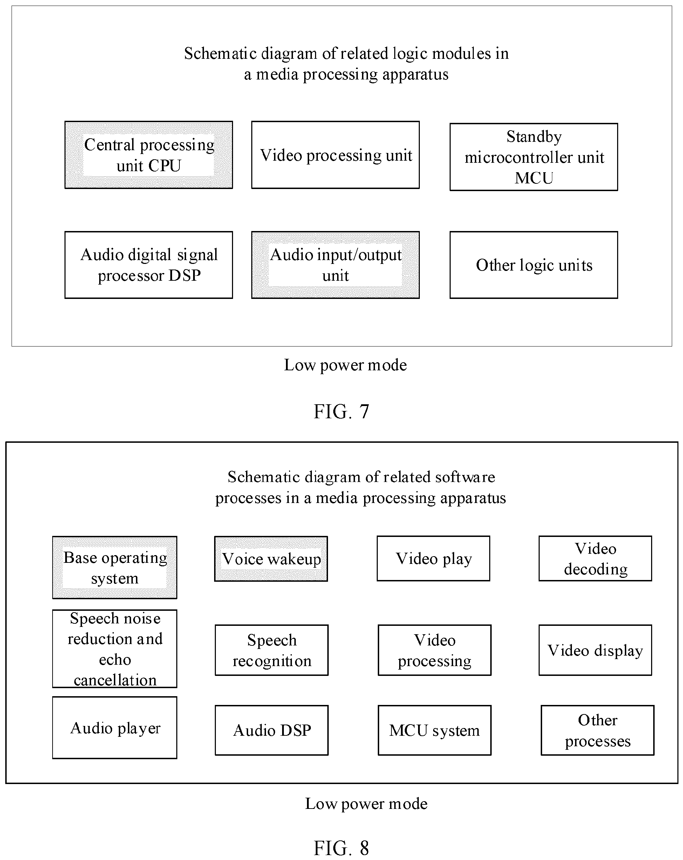

The screen of the intelligent terminal is off. The intelligent terminal stops an irrelevant service process, turns off an irrelevant logic module, retains a service and process related to voice wakeup, retains the audio input/output unit, selects a quantity of CPU cores, and adjusts a frequency (optional). To be specific, a logic module and a software process that are related to voice wakeup and the like are kept in an operating state in the media processing apparatus, so that the intelligent terminal can receive a voice instruction through the audio input/output unit. FIG. 7 is a schematic diagram of a structure of a media processing apparatus in a low power mode according to an embodiment of this application. FIG. 8 is a schematic diagram of related software processes in a media processing apparatus in a low power mode according to an embodiment of this application. As shown in FIG. 7, in the low power mode, the CPU and the audio input/output unit are in an on state, and the audio DSP, the video processing unit, and remaining irrelevant logic modules are in an off state. As shown in FIG. 8, the base operating system and the service and process related to voice wakeup in the CPU are in an enabled state, and remaining irrelevant services and processes are in a stopped state. Optionally, in the low power mode, some CPU cores of the multi-core processor may be turned off, and other CPU cores may be retained, to ensure normal operation of the base operating system and the voice wakeup-related service and process in the CPU while reducing power consumption.

### In the speaker mode:

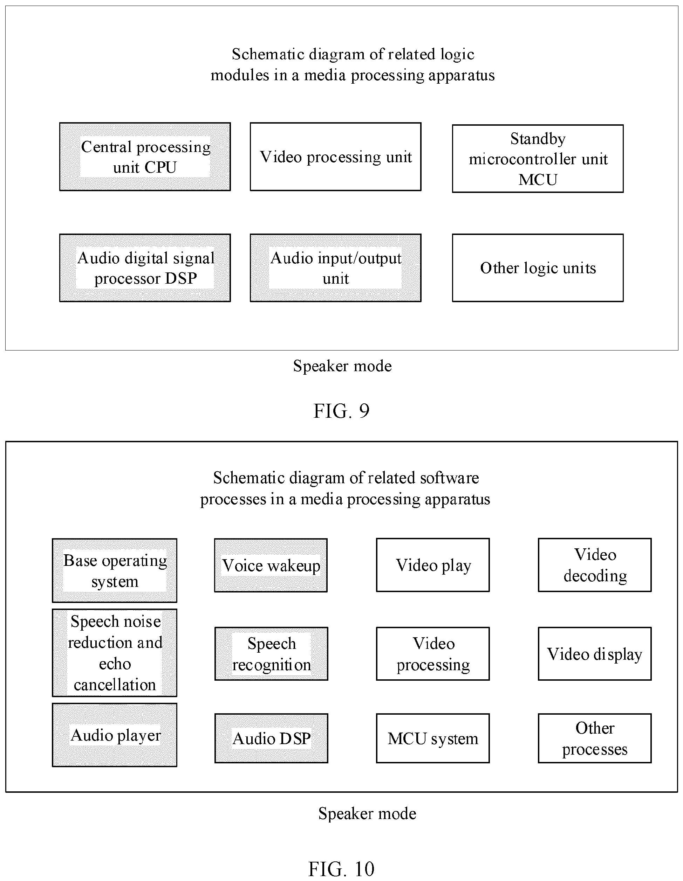

The screen of the intelligent terminal is off. The intelligent terminal stops an irrelevant service process, turns off an irrelevant logic module, retains a service and process related to voice wakeup, retains a service and process related to audio decoding and play, retains the audio player, retains the audio DSP, and retains the audio input/output unit. To be specific, a logic module and a software process that are related to audio decoding and play (for example, the speech noise reduction and echo cancellation, the speech recognition, and the audio player) are kept in an operating state in the media processing apparatus, so that the intelligent terminal can respond to the voice instruction and play audio. FIG. 9 is a schematic diagram of a structure of a media processing apparatus in a speaker mode according to an embodiment of this application. FIG. 10 is a schematic diagram of related software processes in a media processing apparatus in a speaker mode according to an embodiment of this application. As shown in FIG. 9, in the speaker mode, the CPU, the audio input/output unit, and the audio DSP are in an on state, and the video processing unit and remaining irrelevant logic modules are in an off state. As shown in FIG. 10, services and processes related to the base operating system, the voice wakeup, the speech noise reduction and echo cancellation, the speech recognition, the audio player, and the audio DSP in the CPU are in an enabled state, and remaining irrelevant service processes are in a disabled state.

When the intelligent terminal is in the low power mode, a voice wakeup process in the CPU is kept in an enabled state, so that a user controls, through voice, the intelligent terminal to switch from the low power mode to the speaker mode or the on mode, to reduce operation difficulty of the user. In addition, when the intelligent terminal is in the speaker mode, an audio decoding and play process in the CPU is kept in an enabled state, to ensure normal audio play and meet a user requirement.

### In the on mode:

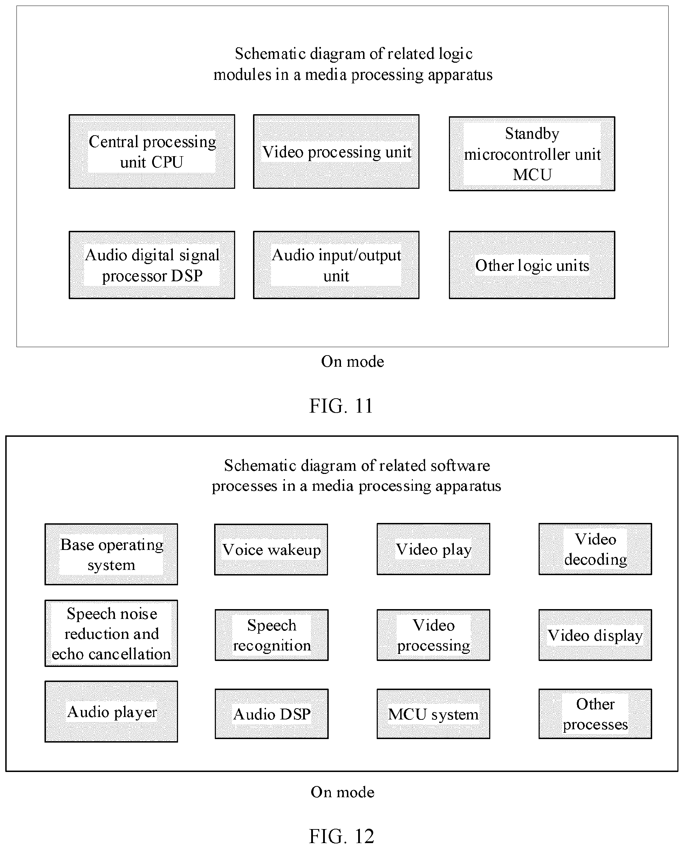

The display of the intelligent terminal is on. A system process of the intelligent terminal is in an operating state, and all logic modules are turned on. To be specific, a logic module and a software process that are related to audio decoding and play and video decoding and display are kept in an operating state in the media processing apparatus, so that the intelligent terminal can play audio and a video. FIG. 11 is a schematic diagram of a structure of a media processing apparatus in an on mode according to an embodiment of this application. FIG. 12 is a schematic diagram of related software processes in a media processing apparatus in an on mode according to an embodiment of this application. As shown in FIG. 11, in the on mode, the CPU, the audio input/output unit, the audio DSP, the video processing unit, the standby microcontroller unit MCU, and other logic units are all in an on state, and the display of the intelligent terminal is in an on state. All related services and processes, such as the base operating system, the voice wakeup, the speech recognition, the audio player, the video player, the decoding driver, and the video processing and display drivers in the CPU, the DSP software in the audio DSP, and the standby software system in the standby microcontroller unit MCU (all services and processes shown in FIG. 12), are in an enabled state. In the on mode, the intelligent terminal may keep all hardware logic and software processes (for example, audio-related and video-related hardware logic) in an enabled state, to implement a plurality of functions of the intelligent terminal.

In addition, in the low power mode and the speaker mode, the display of the intelligent terminal is in the off state, that is, cannot implement a video play function or the like. In this way, in different modes, related hardware logic and software processes are enabled or started, and irrelevant hardware logic and software processes are disabled or stopped. This can ensure implementation of different functions of the intelligent terminal, and can also reduce consumption of the intelligent terminal, and ensure service life of the intelligent terminal.

Optionally, in the low power mode and the speaker mode, the standby microcontroller unit MCU may alternatively be in an on state, to receive and process a remote control event, a keypad event, and the like. This is not specifically limited in this application.

In this embodiment of this application, in the low power mode, the CPU and the audio input/output unit are turned on, and the audio DSP and the video processing unit are turned off, so that the intelligent terminal can receive user speech (namely, a first voice instruction) in the low power mode; and in the speaker mode, the CPU, the audio input/output unit, and the audio DSP are turned on, and the video processing unit is turned off, so that the intelligent terminal can respond to the user speech and play audio in the speaker mode. In the low power mode, the CPU is in the on state (the CPU is not powered off), and the CPU wakes up a related logic module and software process, and controls the intelligent terminal to switch from the low power mode to the speaker mode. Different from the conventional technology, in this embodiment of this application, no dedicated wakeup control unit or wakeup DSP needs to be added, and no wakeup control unit needs to be integrated into the MCU to wake up a related logic module and software process. This reduces hardware costs of the media processing apparatus, and simplifies a hardware circuit of the media processing apparatus. In addition, because the CPU is in the on state, in terms of a response speed, in this embodiment of this application, a response speed after a voice instruction is received is higher than a response speed in the conventional technology in which a CPU is in an off state and is woken up by a wakeup control unit after a voice instruction is received. In addition, only a software process related to voice wakeup is enabled in the CPU, and other irrelevant software processes are in a disabled state. Therefore, overall power consumption of the intelligent terminal in this embodiment of this application is lower than that in the conventional technology in which all software processes in the CPU are enabled. In this embodiment of this application, the overall power consumption can be kept at approximately 1.5 W, without affecting service life of the CPU and the intelligent terminal. That is, in different modes, some hardware logic modules related to a mode function in the media processing apparatus are turned on, and other hardware logic modules irrelevant to the mode function are in an off state. Compared with a manner in which all hardware logic modules are turned on, in a manner in which some hardware logic modules are turned off, power consumption of the intelligent terminal can be reduced, to ensure service life of the intelligent terminal. In addition, compared with a manner in which all hardware logic modules are turned off, in a manner in which some hardware logic modules are turned on, a response speed of the intelligent terminal can be increased when the intelligent terminal receives a related voice instruction, so that user experience is improved. In the low power mode, the CPU is in the on state (the CPU is not powered off), and the CPU wakes up a related logic module and software process, and controls the intelligent terminal to switch from the low power mode to the speaker mode. Different from the conventional technology, in this embodiment of this application, no dedicated wakeup control unit or wakeup DSP needs to be added, and no wakeup control unit needs to be integrated into the MCU to wake up a related logic module and software process. This reduces hardware costs of the media processing apparatus, and simplifies a hardware circuit of the media processing apparatus. In addition, because the CPU is in the on state, in terms of a response speed, in this embodiment of this application, a response speed after a voice instruction is received is higher than a response speed in the conventional technology in which a CPU is in an off state and is woken up by a wakeup control unit after a voice instruction is received. In addition, only a software process related to voice wakeup is enabled in the CPU, and other irrelevant software processes are in a disabled state. Therefore, overall power consumption of the intelligent terminal in this embodiment of this application is lower than that in the conventional technology in which all software processes in the CPU are enabled. In this embodiment of this application, the overall power consumption can be kept at approximately 1.5 W, without affecting service life of the CPU and the intelligent terminal.

Based on the intelligent terminal shown in FIG. 1, the media processing apparatus shown in FIG. 2, the related software processes in the media processing apparatus that are shown in FIG. 3, and the schematic diagram of the framework shown in FIG. 6, the following describes how the media processing apparatus provided in embodiments of this application controls mode switching of the intelligent terminal.

### Switching from the low power mode to the speaker mode:

As shown in FIG. 6, when the intelligent terminal is in the low power mode, the CPU is configured to: receive a first voice instruction through the audio input/output unit; and in response to the first voice instruction, control the intelligent terminal to switch from the low power mode to the speaker mode. The first voice instruction may be user speech that carries a keyword. When the intelligent terminal is in the low power mode and the audio input/output unit receives the user speech that carries the keyword, the CPU controls the intelligent terminal to switch from the low power mode to the speaker mode. The keyword may be one or more words or terms that are set by a user or that are set by default before delivery. This is not specifically limited in this embodiment of this application.

In addition, different voice instructions may correspond to different keywords. When the intelligent terminal is in the low power mode, after the audio input/output unit receives the user speech that carries the keyword, the CPU needs to perform speech recognition on the user speech, and controls, based on user speech obtained through speech recognition, the intelligent terminal to perform mode switching. For example, when the audio input/output unit receives the user speech "Xiaohua, power on", the CPU controls the intelligent terminal to switch from the low power mode to the on mode; or when the audio input/output unit receives the user speech "Hey, Xiaohua", the CPU controls the intelligent terminal to switch from the low power mode to the speaker mode. Optionally, the CPU is specifically configured to: in response to the first voice instruction, wake up the audio DSP, and turn on the audio player, to control the intelligent terminal to switch from the low power mode to the speaker mode. In different modes, some hardware logic modules related to a mode function in the media processing apparatus are turned on, and other hardware logic modules irrelevant to the mode function are in an off state. Therefore, when the intelligent terminal is controlled to switch from the low power mode to the speaker mode, in response to the first voice instruction, the audio DSP is woken up from an off state to an on state, and the audio player is turned on, to ensure that in the speaker mode, services and processes of the intelligent terminal that are related to smart speech and audio decoding and play are in an operating state. In addition, only the audio DSP and the audio player are turned on (irrelevant logic modules are still kept in an off state), so that the intelligent terminal can quickly respond to the voice instruction and play audio. This ensures a response speed when the intelligent terminal switches from the low power mode to the speaker mode, and improves user experience. It should be noted that the audio player is a local or installed third-party audio play application that is in the CPU and that is used to obtain audio information and decode audio.

Optionally, when the intelligent terminal is in the low power mode, the CPU is further configured to: receive a first speaker instruction through the standby MCU; and in response to the first speaker instruction, control the intelligent terminal to switch from the low power mode to the speaker mode. The first speaker instruction may be a remote control instruction sent by a control end (for example, a remote control, a control terminal, or a matching Bluetooth device) to the intelligent terminal, and the remote control instruction is used to control the intelligent terminal to switch from the low power mode to the speaker mode. It should be noted that the remote control instruction is a command that is transmitted by the control end to a controlled end in a remote control system and that instructs a controlled object to operate or how to operate. For example, remote control on power-on, power-off, mode switching, sound adjustment, and program selection for a television is implemented by remote control instructions. Remote control instructions are classified into two types: a continuous instruction and a discontinuous instruction. A type of the remote control instruction is not specifically limited in this embodiment of this application.

### Switching from the speaker mode to the low power mode:

As shown in FIG. 6, when the intelligent terminal is in the speaker mode, the CPU is further configured to receive a second voice instruction through the audio input/output unit; and the CPU is further configured to: in response to the second voice instruction, control the intelligent terminal to switch from the speaker mode to the low power mode. The audio input/output unit receives user speech (namely, the second voice instruction) that carries a keyword, to control the intelligent terminal to switch from the speaker mode to the low power mode. The user can directly switch an operating mode of the intelligent terminal by using a voice instruction. This is convenient and efficient, and greatly improves user experience. It should be noted that the keyword corresponding to the second voice instruction may also be one or more words or terms that are set by the user or that are set by default before delivery, and may be partially the same as the keyword corresponding to the first voice instruction. For example, the keyword corresponding to the second voice may be "Xiaohua, standby", and the keyword corresponding to the first voice may be "Xiaohua", "Xiaohua, play", or "Xiaohua, speaker".

Optionally, the user may alternatively control, by using another instruction form such as a remote control instruction, the intelligent terminal to switch from the speaker mode to the low power mode. For example, the intelligent terminal may be controlled, by using a control instruction sent by the control terminal to the intelligent terminal, to switch from the speaker mode to the low power mode.

Optionally, when the intelligent terminal is in the speaker mode, the CPU is further configured to: if no audio play service is performed and no voice instruction is received within preset duration, control the intelligent terminal to switch from the speaker mode to the low power mode. If the intelligent terminal is in an idle state for a long time in the speaker mode, to save communication resources and extend service life of the intelligent terminal, the media processing apparatus may automatically control the intelligent terminal to switch from the speaker mode to the low power mode, to reduce resource consumption. For example, after the intelligent terminal finishes playing audio information, if no user operation (for example, a song play request, a content search request, or a voice interaction request) is received again within the preset duration, the CPU may directly control the intelligent terminal to switch from the speaker mode to the low power mode. The preset duration may be duration specified by the user, or may be duration specified by default before delivery. This is not specifically limited in this embodiment of this application.

In a possible implementation, the CPU is specifically configured to turn off the audio DSP and turn off the audio player, to control the intelligent terminal to switch from the speaker mode to the low power mode. When controlling the intelligent terminal to switch from the speaker mode to the low power mode, the media processing apparatus needs to disable or stop hardware logic and software processes (for example, the audio DSP and the audio player) that are related to audio play, and retains only hardware logic and software processes (for example, the audio input/output unit) that are related to voice receiving, so that the intelligent terminal can normally receive a voice instruction. This ensures switching between modes when a first voice instruction is received again.

### Switching from the speaker mode or the low power mode to the on mode:

As shown in FIG. 6, when the intelligent terminal is in the speaker mode, the CPU is further configured to: in response to a received first power-on instruction, control the intelligent terminal to switch from the speaker mode to the on mode, where the controlling the intelligent terminal to switch from the speaker mode to the on mode includes: turning on the display, and turning on the video processing unit. In the speaker mode, the intelligent terminal can meet only an audio play requirement of the user, and cannot meet a video play requirement of the user. In the on mode, the intelligent terminal can meet both an audio play requirement and a video play requirement of the user. Therefore, when switching from the speaker mode to the on mode, the intelligent terminal needs to turn on the display and the video processing unit in response to a power-on instruction (namely, the first power-on instruction) of the user, to ensure that the intelligent terminal can play a video to meet a user requirement. It should be noted that, in the on mode, all logic modules of the intelligent terminal are in an on state; and in the speaker mode or the low power mode, some logic modules of the intelligent terminal are in an on state.

Optionally, the CPU is specifically configured to: in response to the first power-on instruction, turn on the display, and turn on the plurality of units of the graphics processing unit GPU, the video display unit, the video decoding unit, and the video processing subunit, to control the intelligent terminal to switch from the speaker mode to the on mode. The video processing unit may include one or more of the following logic modules: the graphics processing unit (Graphics Processing Unit, GPU), the video display unit, the video decoding unit, and the video processing subunit. To meet a video play requirement of the user, when the intelligent terminal switches from the speaker mode to the on mode, the media processing apparatus may respond to the first power-on instruction, and needs to enable all related hardware logic for video play and enable all related software processes for video play.

As shown in FIG. 6, when the intelligent terminal is in the low power mode, the CPU is further configured to: in response to a received second power-on instruction, control the intelligent terminal to switch from the low power mode to the on mode, where the controlling the intelligent terminal to switch from the low power mode to the on mode includes: turning on the display, and turning on the audio DSP and the video processing unit. During implementation of this embodiment of this application, in the low power mode, the intelligent terminal can only receive a voice instruction of the user, but cannot meet an audio play requirement, a video play requirement, or the like of the user. Therefore, when switching from the low power mode to the on mode, the intelligent terminal needs to turn on the audio DSP, the display, and the video processing unit in response to a power-on instruction (namely, the second power-on instruction) of the user, to ensure that the intelligent terminal can play audio and a video.

Optionally, the CPU is specifically configured to: in response to the second power-on instruction, turn on the display and the audio DSP, and turn on the plurality of units of the graphics processing unit GPU, the video display unit, the video decoding unit, and the video processing subunit, to control the intelligent terminal to switch from the low power mode to the on mode. The video processing unit may include one or more of the following logic modules: the graphics processing unit GPU, the video display unit, the video decoding unit, and the video processing subunit. To meet a video play requirement of the user, when the intelligent terminal switches from the low power mode to the on mode, the media processing apparatus needs to enable and start all related hardware logic and software processes for audio play and video play, for example, the display, the audio DSP, and the plurality of units of the graphics processing unit (Graphics Processing Unit, GPU), the video display unit, the video decoding unit, and the video processing subunit.

Optionally, the first power-on instruction and the second power-on instruction are in any one of the following instruction forms: a voice instruction, a button instruction, a remote control instruction, and a touch instruction. In this embodiment of this application, the first power-on instruction and the second power-on instruction that the intelligent terminal responds to may have a plurality of instruction forms, to facilitate user operations and improve user experience. The first power-on instruction and the second power-on instruction may be voice instructions. To be specific, the user may control, through user speech that carries a keyword, the intelligent terminal to be powered on. The first power-on instruction and the second power-on instruction may be button instructions. To be specific, the user may press a power-on button on the intelligent terminal to control the intelligent terminal to be powered on. The first power-on instruction and the second power-on instruction may be remote control instructions. To be specific, the user may operate a remote control that matches the intelligent terminal to control the intelligent terminal to be powered on, or the user may operate a control terminal that matches the intelligent terminal to control the intelligent terminal to be powered on. Alternatively, the first power-on instruction and the second power-on instruction may be touch instructions. To be specific, the user may touch a touchscreen corresponding to the intelligent terminal to control the intelligent terminal to be powered on. Instruction forms of the first power-on instruction and the second power-on instruction are not specifically limited in this embodiment of this application.

### Switching from the on mode to the speaker mode or the low power mode:

As shown in FIG. 6, when the intelligent terminal is in the on mode, the CPU is further configured to: receive a speaker mode switching instruction through the audio input/output unit, and in response to the speaker mode switching instruction, control the intelligent terminal to switch from the on mode to the speaker mode; or receive a sleep instruction through the audio input/output unit, and in response to the sleep instruction, control the intelligent terminal to switch from the on mode to the low power mode. When the intelligent terminal is in the on mode, the user may control, by using a user instruction, the intelligent terminal to switch from the on mode to the low power mode or the speaker mode, and may turn off the display, turn off an irrelevant logic module, and stop an irrelevant software process, to save device resources. In addition, the speaker mode switching instruction and the sleep instruction may also be in any one of the following instruction forms: a voice instruction, a button instruction, a remote control instruction, and a touch instruction. The control modes in the plurality of forms are convenient and efficient, and facilitate user operations. According to a mode requirement, the intelligent terminal turns on some hardware logic modules related to a mode function, or turns off some hardware logic modules irrelevant to the mode function. Compared with a manner in which all hardware logic modules are turned on, in a manner in which some hardware logic modules are turned off, power consumption of the intelligent terminal can be reduced, to ensure service life of the intelligent terminal. In addition, compared with a manner in which all hardware logic modules are turned off, in a manner in which some hardware logic modules are turned on, a response speed of the intelligent terminal can be increased when the intelligent terminal receives a related voice instruction, so that user experience is improved. Therefore, in this embodiment of this application, a response speed of the intelligent terminal is ensured while service life of the intelligent terminal is ensured. In addition, during switching between different modes, switching instructions may be implemented in a plurality of instruction forms. The control modes in the plurality of forms are convenient and efficient, and facilitate user operations.

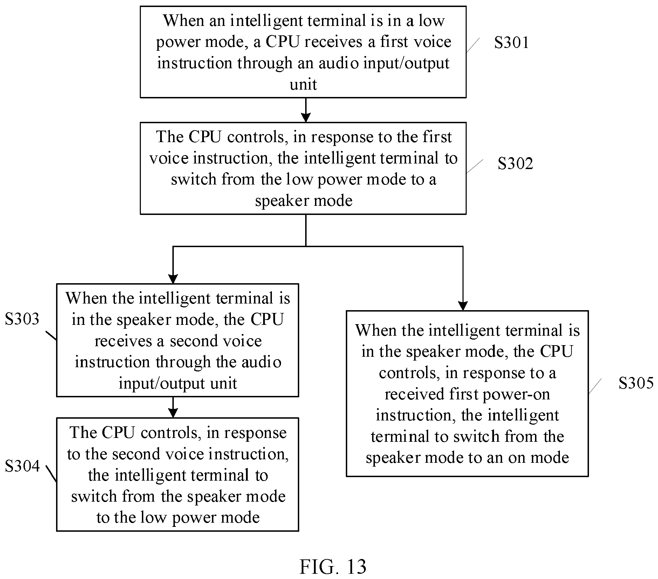

Based on the intelligent terminal shown in FIG. 1, the media processing apparatus shown in FIG. 2, the related software processes in the media processing apparatus that are shown in FIG. 3, and the schematic diagram of the framework shown in FIG. 6, the following describes a media processing method provided in embodiments of this application. FIG. 13 is a schematic flowchart of a media processing method according to an embodiment of this application. The method may be applied to the architecture of the intelligent terminal shown in FIG. 1. The media processing apparatus shown in FIG. 2 may be configured to support and perform step S301 to step S305 of the method process shown in FIG. 13.

The media processing apparatus includes a central processing unit CPU, an audio input/output unit, an audio digital signal processor DSP, and a video processing unit. The intelligent terminal includes a low power mode and a speaker mode. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state.

With reference to FIG. 13, the following provides descriptions from a perspective of the media processing apparatus. The method may include the following step S301 to step S305. The method includes the following steps.

Step S301: When the intelligent terminal is in the low power mode, the CPU receives a first voice instruction through the audio input/output unit.

Specifically, when the intelligent terminal is in the low power mode, the CPU receives the first voice instruction through the audio input/output unit. To be specific, after receiving the first voice instruction, the audio input/output unit forwards the first voice instruction to the CPU, so that the CPU performs voice analysis on the first voice instruction.

Step S302: The CPU controls, in response to the first voice instruction, the intelligent terminal to switch from the low power mode to the speaker mode.

Specifically, after performing voice analysis on the first voice instruction, the CPU controls, in response to the first voice instruction, the intelligent terminal to switch from the low power mode to the speaker mode.

Optionally, that the CPU controls, in response to the first voice instruction, the intelligent terminal to switch from the low power mode to the speaker mode includes: The CPU wakes up the audio DSP and turns on an audio player in response to the first voice instruction, so that the intelligent terminal switches from the low power mode to the speaker mode. In response to the first voice instruction, the audio DSP is woken up from an off state to an on state, and the audio player is turned on, to ensure that in the speaker mode, services and processes of the intelligent terminal that are related to smart speech and audio decoding and play are in an operating state. In addition, only the audio DSP and the audio player are turned on, so that the intelligent terminal can quickly respond to the voice instruction and play audio. This ensures a response speed when the intelligent terminal switches from the low power mode to the speaker mode, and improves user experience. Step S303: When the intelligent terminal is in the speaker mode, the CPU receives a second voice instruction through the audio input/output unit.

Specifically, when the intelligent terminal is in the speaker mode, the CPU receives the second voice instruction through the audio input/output unit. To be specific, after receiving the second voice instruction, the audio input/output unit forwards the second voice instruction to the CPU, so that the CPU performs voice analysis on the second voice instruction.

Step S304: The CPU controls, in response to the second voice instruction, the intelligent terminal to switch from the speaker mode to the low power mode.

Specifically, after performing voice analysis on the second voice instruction, the CPU controls, in response to the second voice instruction, the intelligent terminal to switch from the speaker mode to the low power mode.

Optionally, the controlling the intelligent terminal to switch from the speaker mode to the low power mode includes: The CPU turns off the audio DSP and turns off the audio player, so that the intelligent terminal switches from the speaker mode to the low power mode.

Optionally, the method further includes: When the intelligent terminal is in the speaker mode, if no audio play service is performed and no voice instruction is received within preset duration, the CPU controls the intelligent terminal to switch from the speaker mode to the low power mode. Optionally, the intelligent terminal further includes an on mode. In the on mode, the CPU, the audio input/output unit, the audio DSP, and the video processing unit are all in an on state, and a display of the intelligent terminal is in an on state. In the low power mode and the speaker mode, the display of the intelligent terminal is in an off state.

Step S305: When the intelligent terminal is in the speaker mode, the CPU controls, in response to a received first power-on instruction, the intelligent terminal to switch from the speaker mode to the on mode.

Specifically, when the intelligent terminal is in the speaker mode, the CPU turns on the display and turns on the video processing unit in response to the received first power-on instruction, to control the intelligent terminal to switch from the speaker mode to the on mode.

Optionally, the video processing unit includes a plurality of units of a graphics processing unit GPU, a video display unit, a video decoding unit, and a video processing subunit. That the CPU turns on the display and turns on the video processing unit in response to the received first power-on instruction includes: in response to the first power-on instruction, turning on the display, and turning on the plurality of units of the graphics processing unit GPU, the video display unit, the video decoding unit, and the video processing subunit, to control the intelligent terminal to switch from the speaker mode to the on mode.

Optionally, when the intelligent terminal is in the low power mode, the CPU turns on the display and turns on the audio DSP and the video processing unit in response to a received second power-on instruction, to control the intelligent terminal to switch from the low power mode to the on mode.

Optionally, the video processing unit includes a plurality of units of a graphics processing unit GPU, a video display unit, a video decoding unit, and a video processing subunit. That the CPU turns on the display and turns on the audio DSP and the video processing unit in response to a received second power-on instruction includes: in response to the second power-on instruction, turning on the display and the audio DSP, and turning on the plurality of units of the graphics processing unit GPU, the video display unit, the video decoding unit, and the video processing subunit, to control the intelligent terminal to switch from the low power mode to the on mode.

In a possible implementation, the first power-on instruction and the second power-on instruction are in any one of the following instruction forms: a voice instruction, a button instruction, a remote control instruction, and a touch instruction.

Optionally, when the intelligent terminal is in the on mode, the CPU receives a speaker mode switching instruction through the audio input/output unit, and in response to the speaker mode switching instruction, controls the intelligent terminal to switch from the on mode to the speaker mode; or when the intelligent terminal is in the on mode, the CPU receives a sleep instruction through the audio input/output unit, and in response to the sleep instruction, controls the intelligent terminal to switch from the on mode to the low power mode.

In a possible implementation, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core in the on mode.

In a possible implementation, when the intelligent terminal is in the low power mode, a voice wakeup process in the CPU is in an enabled state; and when the intelligent terminal is in the speaker mode, an audio decoding and play process in the CPU is in an enabled state.

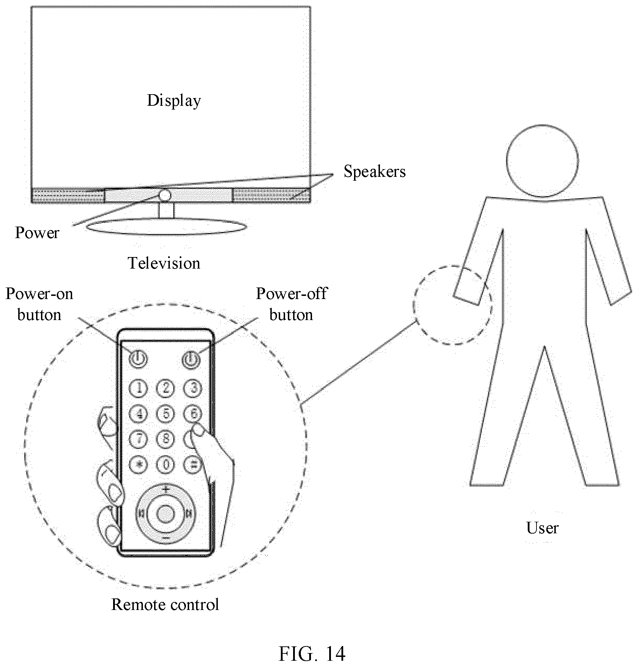

In this embodiment of this application, when the intelligent terminal is in the low power mode, the central processing unit (Central Processing Unit, CPU) and the audio input/output unit are in the on state, and the audio digital signal processor (Digital signal processor, DSP) and the video processing unit are in the off state, so that the audio input/output unit receives user speech (for example, the first voice instruction) when the intelligent terminal is in the low power mode; and in the speaker mode, the CPU, the audio input/output unit, and the audio DSP are in an on state, and the video processing unit is in an off state, so that when the intelligent terminal is in the speaker mode, the CPU wakes up the audio DSP, and then the audio DSP responds to user speech and plays audio. In the low power mode, the CPU is in the on state (the CPU is not powered off), and the CPU wakes up a related logic module and software process, and controls the intelligent terminal to switch from the low power mode to the speaker mode. Different from the conventional technology, in this embodiment of this application, no dedicated wakeup control unit or wakeup DSP needs to be added, and no wakeup control unit needs to be integrated into the MCU to wake up a related logic module and software process. This reduces hardware costs of the media processing apparatus, and simplifies a hardware circuit of the media processing apparatus. In addition, because the CPU is in the on state, in terms of a response speed, in this embodiment of this application, a response speed after a voice instruction is received is higher than a response speed in the conventional technology in which a CPU is in an off state and is woken up by a wakeup control unit after a voice instruction is received. In addition, only a software process related to voice wakeup is enabled in the CPU, and other irrelevant software processes are in a disabled state. Therefore, overall power consumption of the intelligent terminal in this embodiment of this application is lower than that in the conventional technology in which all software processes in the CPU are enabled. In this embodiment of this application, the overall power consumption can be kept at approximately 1.5 W, without affecting service life of the CPU and the intelligent terminal. That is, in different modes, some hardware logic modules related to a mode function in the media processing apparatus are turned on, and other hardware logic modules irrelevant to the mode function are in an off state. Compared with a manner in which all hardware logic modules are turned on, in a manner in which some hardware logic modules are turned off, power consumption of the intelligent terminal can be reduced, to ensure service life of the intelligent terminal. In addition, compared with a manner in which all hardware logic modules are turned off, in a manner in which some hardware logic modules are turned on, a response speed of the intelligent terminal can be increased when the intelligent terminal receives a related voice instruction, so that user experience is improved. In addition, different from a standby mode in the conventional technology, the speaker mode mentioned in this embodiment of this application is a new mode between the low power mode and the on mode. When the intelligent terminal is in the speaker mode, on a premise that a voice instruction of a user can be received and audio can be played, some hardware logic modules irrelevant to a mode function are turned off, to reduce power consumption of the intelligent terminal as much as possible. In addition, because some hardware logic modules are retained, a speed of switching the intelligent terminal from the speaker mode to the on mode is greatly increased. Therefore, in this embodiment of this application, a response speed of the intelligent terminal is ensured while service life of the intelligent terminal is ensured. Based on the intelligent terminal shown in FIG. 1, the media processing apparatus shown in FIG. 2, the related software processes in the media processing apparatus that are shown in FIG. 3, and the schematic diagram of the framework shown in FIG. 6, with reference to the media processing method provided in embodiments of this application, FIG. 14 is a schematic diagram of a scenario in an application scenario according to an embodiment of this application.

Application scenario: As shown in FIG. 14, when the intelligent terminal is a television, a user may perform an interactive operation with the television through a related device or module such as a remote control, a touchscreen, an audio input/output unit, or a button, to control the television to perform audio play, video play, voice interaction, content search, image display, or the like. In the conventional technology, when a user does not use a video play function of a television, a display of the television is usually turned off, all internal logic modules and software processes of the television are also disabled, and only an MCU integrated with a control unit that supports audio input, local speech recognition, and wakeup processing is retained, to normally wake up all logic modules and software processes next time the television is powered on or a smart speaker function is used. However, chip costs increase due to the integration of the control unit into the MCU. In addition, that the MCU recognizes a voice wakeup instruction and then wakes up all logic modules is equivalent to that the television is powered on again, resulting in a slow response to voice wakeup and audio play. Therefore, in the application scenario shown in FIG. 14, according to the media processing method in embodiments of this application, in this embodiment of this application, the following operations may be implemented in a process of controlling the television to perform mode switching:
When the television is in a low power mode, the television receives a first control instruction and switches from the low power mode to a speaker mode, or receives a second control instruction and switches from the low power mode to an on mode.

That the television receives a first control instruction and switches from the low power mode to a speaker mode includes: The television receives the first control instruction, and wakes up an audio DSP and turns on an audio player in response to the first control instruction, so that the television switches from the low power mode to the speaker mode.

That the television receives a second control instruction and switches from the low power mode to an on mode includes: The television receives the second control instruction, and turns on a display and turns on the audio DSP and a video processing unit in response to the second control instruction, to control the television to switch from the low power mode to the on mode.

When the television is in the speaker mode, the television receives a third control instruction and switches from the speaker mode to the low power mode, or receives a fourth control instruction and switches from the speaker mode to the on mode.

That the television receives a third control instruction and switches from the speaker mode to the low power mode includes: The television receives the third control instruction, and turns off the audio DSP in response to the third control instruction, to control the television to switch from the speaker mode to the low power mode.

That the television receives a fourth control instruction and switches from the speaker mode to the on mode includes: The television receives the fourth control instruction, and turns on the display and turns on the video processing unit in response to the fourth control instruction, to control the television to switch from the speaker mode to the on mode.

When the television is in the on mode, the television receives a fifth control instruction and switches from the on mode to the speaker mode, or receives a sixth control instruction and switches from the on mode to the low power mode.

That the television receives a fifth control instruction and switches from the on mode to the speaker mode includes: The television receives the fifth control instruction, and turns off the display and turns off the video processing unit in response to the fifth control instruction, to control the television to switch from the on mode to the speaker mode.

That the television receives a sixth control instruction and switches from the on mode to the low power mode includes: The television receives the sixth control instruction, and turns off the display, the audio DSP, and the video processing unit in response to the sixth control instruction, to control the television to switch from the on mode to the low power mode.

In addition, the first control instruction, the second control instruction, the third control instruction, the fourth control instruction, the fifth control instruction, and the sixth control instruction are in any one of the following instruction forms: a voice instruction, a button instruction, a remote control instruction, and a touch instruction. For example, when the first control instruction and the third control instruction are voice instructions, the user controls, through voice, the television to switch between the speaker mode and the low power mode.

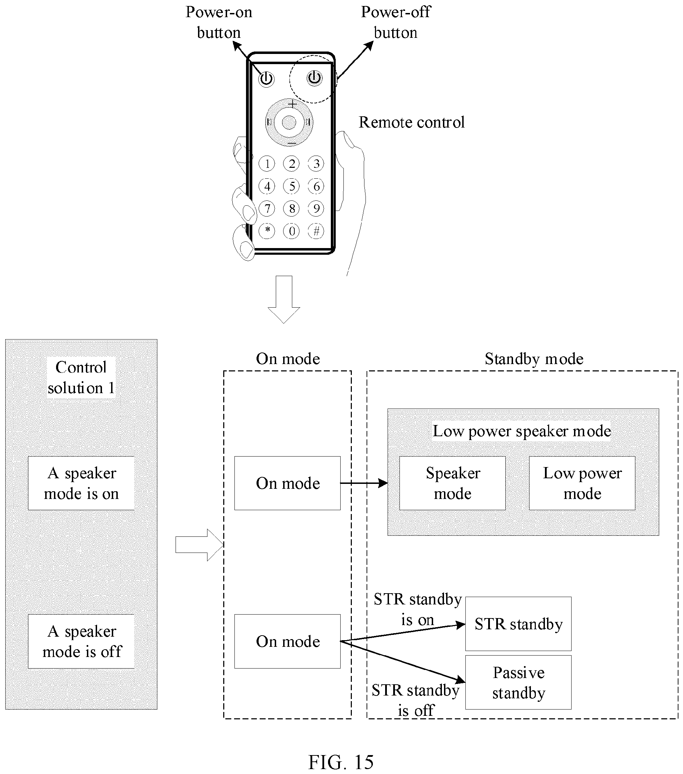

In the application scenario shown in FIG. 14, in this embodiment of this application, a control end held by a user has a speaker mode switch, or a menu of the control end includes a standby mode for selecting a smart speaker mode. FIG. 15 is a schematic diagram of a control end with a speaker mode according to an embodiment of this application. As shown in FIG. 15, a user may enable a smart speaker function of an intelligent terminal by using a remote control or a control end. When the user presses a "power-off button" on the remote control or says a voice instruction carrying a preset keyword such as "power off", "standby", "speaker", or "sleep", a standby mode menu option in a main menu of the intelligent terminal may be set to Low power speaker mode, STR fast standby, or Passive standby. If the standby mode menu option in the main menu of the intelligent terminal is set to "Low power speaker mode", the intelligent terminal enters a low power speaker mode. For example, when a television is powered on and a power-off button is pressed by using a remote control, the television switches from an on mode to the low power mode in embodiments of this application based on a "Low power speaker mode" option selected by a control instruction for the television. When the intelligent terminal is in the low power mode, the intelligent terminal may further switch to the speaker mode at any time according to a received user instruction. To be specific, a display is turned off, logic modules and software processes that are related to video play and audio play are disabled, and hardware logic and software processes that are related to voice wakeup are retained, so that the intelligent terminal can receive a voice instruction. If the standby mode menu option in the main menu of the intelligent terminal is set to "Passive standby/Shutdown", the system enters a passive standby mode. If the standby mode menu option in the main menu of the intelligent terminal is set to "STR (Suspend to RAM)/Sleep", the intelligent terminal enters an STR standby mode. For example, when the television is powered on and the power-off button is pressed by using the remote control, the television controls, based on an "STR (Suspend to RAM)/Sleep" option selected by a control instruction for the television, the television to switch from the on mode to an STR standby mode.

It should be noted that, in the STR standby mode, related logic modules such as an audio input/output unit, a video processing unit, and a CPU in a media processing apparatus are in an off state, and a double rate synchronous dynamic random access memory (Double Data Rate, DDR) and a standby MCU are in an on state. Because the DDR is in the on state, a data loss can be prevented in a self-refresh state. After the standby MCU receives a power-on instruction and controls the intelligent terminal to be powered on again, the intelligent terminal can quickly resume a state available before the power-on. When the intelligent terminal is turned off in the STR standby mode, the intelligent terminal enters the passive standby mode. A response to power-on is fast, so that user experience is improved.

It should be further noted that, in the passive standby mode, the CPU, the audio input/output unit, an audio DSP, the video processing unit, the display, and the DDR are all in an off state, and the standby MCU is in an on state. That is, in the passive standby mode, all logic modules other than the standby MCU are in an off state, and only the standby MCU is in the on state. The standby MCU performs only a simple standby-related function, for example, receives and processes a remote control event, a keypad event, and the like of the intelligent terminal in the standby state, and is not integrated with a control unit that supports audio input, local speech recognition, and wakeup processing. This greatly reduces power consumption of the intelligent terminal in the standby state.

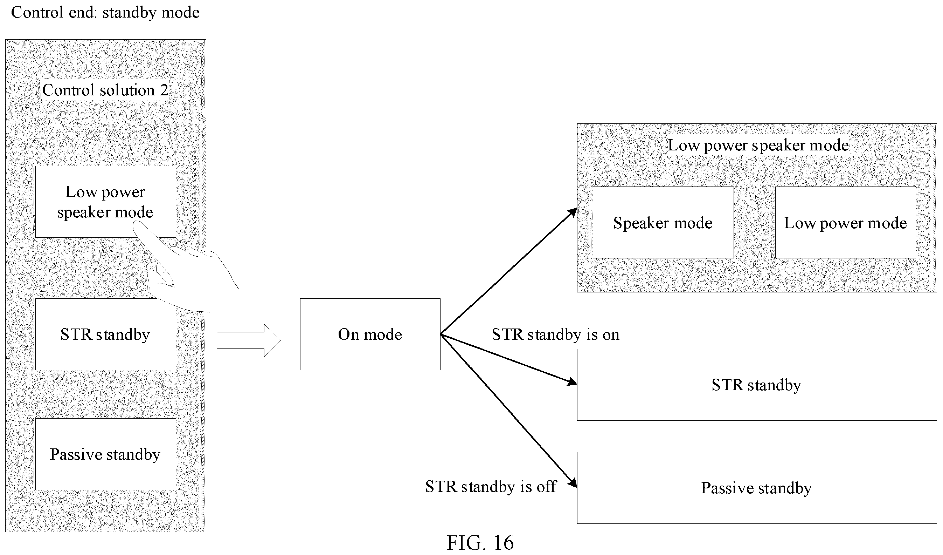

In addition, FIG. 16 is a schematic diagram of another control end with a speaker mode according to an embodiment of this application. As shown in FIG. 16, when an intelligent terminal is powered on and a user controls, through the control end, the intelligent terminal to switch from an on mode to a passive standby mode, several standby modes are available for selection by the user in a menu displayed on the intelligent terminal or at the control end. For example, a speaker mode, an STR standby mode, or a passive standby mode may be selected. The user may select different modes through the control end to control a television to perform mode switching. For example, after the user presses a standby button on a remote control or the user says a voice instruction carrying a keyword "shut down" or "standby", the intelligent terminal may display menu items: Speaker mode, STR standby, and Passive standby. Then the user selects one of the corresponding three modes by using a button on the remote control, or selects one of the three modes by using a voice instruction. Then the intelligent terminal is controlled to switch from the on mode to a corresponding standby state. For example, when the user selects the speaker mode, if the user controls, through the remote control or the control end, the television to switch from the on mode to a passive standby mode, and the television may switch from the on mode to the speaker mode or the low power mode in embodiments of this application according to a control instruction for the television. To be specific, a display is turned off, and video play and audio play are disabled, or logic modules and software processes that are related to video play are disabled.

It can be understood that FIG. 14 shows merely an example scenario provided in embodiments of this application. Scenarios, in embodiments of this application, in which an intelligent terminal is applied and the intelligent terminal is controlled to perform mode switching include but are not limited to the foregoing scenario.

It can be further understood that FIG. 15 and FIG. 16 are merely example menu selection modes provided in embodiments of this application. Control methods, in embodiments of this application, that are applied to an intelligent terminal and that are used to control the intelligent terminal to perform mode switching include but are not limited to the foregoing control methods.

The foregoing describes the method in embodiments of this application in detail, and the following provides a related apparatus in embodiments of this application.

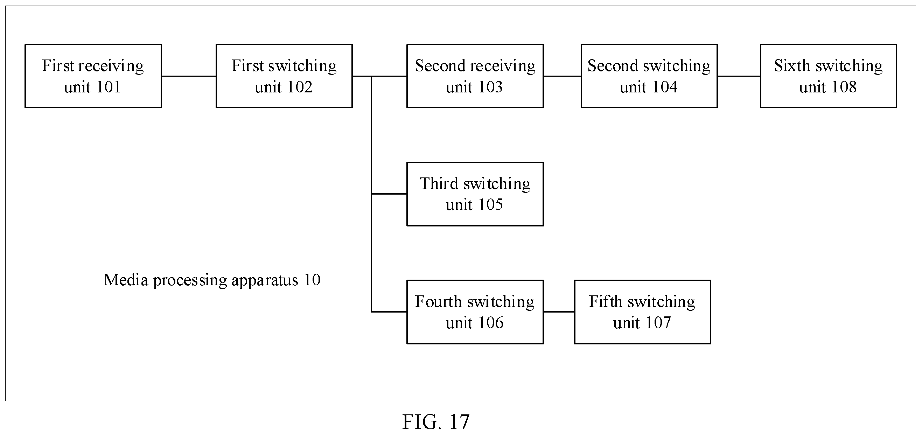

FIG. 17 is a schematic diagram of a structure of still another media processing apparatus according to an embodiment of this application. The media processing apparatus is applied to an intelligent terminal. The intelligent terminal includes a central processing unit CPU, an audio input/output unit, an audio digital signal processor DSP, and a video processing unit. The intelligent terminal includes a low power mode and a speaker mode. In the low power mode, the CPU and the audio input/output unit are in an on state, and the audio DSP and the video processing unit are in an off state. In the speaker mode, the CPU, the audio input/output unit, and the audio DSP are in an on state, and the video processing unit is in an off state.

As shown in FIG. 17, the media processing apparatus 10 may include a first receiving unit 101 and a first switching unit 102, and may further include a second receiving unit 103, a second switching unit 104, a third switching unit 105, a fourth switching unit 106, a fifth switching unit 107, and a sixth switching unit 108. The units are described in detail below.

The first receiving unit 101 is configured to receive a first voice instruction when the intelligent terminal is in the low power mode. The first switching unit 102 is configured to: in response to the first voice instruction, control the intelligent terminal to switch from the low power mode to the speaker mode.

In a possible implementation, the first switching unit 101 is specifically configured to: in response to the first voice instruction, wake up the audio DSP, and turn on an audio player, to control the intelligent terminal to switch from the low power mode to the speaker mode.

In a possible implementation, the apparatus further includes: the second receiving unit 103, configured to receive a second voice instruction when the intelligent terminal is in the speaker mode; and the second switching unit 104, configured to: in response to the second voice instruction, control the intelligent terminal to switch from the speaker mode to the low power mode.

In a possible implementation, the apparatus further includes: the third switching unit 105, configured to: when the intelligent terminal is in the speaker mode, if no audio play service is performed and no voice instruction is received within preset duration, control the intelligent terminal to switch from the speaker mode to the low power mode.

In a possible implementation, the second switching unit 104 is specifically configured to turn off the audio DSP and turn off the audio player, to control the intelligent terminal to switch from the speaker mode to the low power mode.

In a possible implementation, the intelligent terminal further includes an on mode. In the on mode, the CPU, the audio input/output unit, the audio DSP, and the video processing unit are all in an on state, and a display of the intelligent terminal is in an on state. In the low power mode and the speaker mode, the display of the intelligent terminal is in an off state.

In a possible implementation, the apparatus further includes the fourth switching unit 106, configured to: when the intelligent terminal is in the speaker mode, turn on the display and turn on the video processing unit in response to a received first power-on instruction, to control the intelligent terminal to switch from the speaker mode to the on mode.

In a possible implementation, the apparatus further includes the fifth switching unit 107. The fifth switching unit 107 is configured to: when the intelligent terminal is in the on mode, receive a speaker mode switching instruction, and in response to the speaker mode switching instruction, control the intelligent terminal to switch from the on mode to the speaker mode; or when the intelligent terminal is in the on mode, receive a sleep instruction, and in response to the sleep instruction, control the intelligent terminal to switch from the on mode to the low power mode. In a possible implementation, the apparatus further includes the sixth switching unit 108. The sixth switching unit 108 is configured to: when the intelligent terminal is in the low power mode, turn on the display and turn on the audio DSP and the video processing unit in response to a received second power-on instruction, to control the intelligent terminal to switch from the low power mode to the on mode.

In a possible implementation, the CPU includes a plurality of CPU cores. When the intelligent terminal is in the low power mode, a part of CPU cores in the CPU are in an operating state, and an operating frequency of the part of CPU cores in the operating state is less than an operating frequency of a CPU core in the on mode.

In a possible implementation, when the intelligent terminal is in the low power mode, a voice wakeup process in the CPU is in an enabled state; and when the intelligent terminal is in the speaker mode, an audio decoding and play process in the CPU is in an enabled state.

It should be noted that division into the foregoing plurality of units is merely logical division based on functions, and is not intended to limit a specific structure of the media processing apparatus 10. During specific implementation, some functional modules may be further divided into more finer-grained functional modules, or some functional modules may be combined into one functional module. However, regardless of whether the functional modules are further divided or combined, general processes performed by the media processing apparatus 10 during mode switching of the intelligent terminal are the same. Usually, each unit corresponds to respective program code (in other words, program instructions). When the program code corresponding to the unit runs on a related hardware apparatus, the unit is enabled to perform a corresponding process to implement a corresponding function. In addition, a function of each unit may alternatively be implemented by related hardware. For example, related functions of the first receiving unit 101 and the second receiving unit 103 may be implemented by an input/output hardware circuit or a logic unit that has a communication interface or a transceiver function. Related functions of the first switching unit 102, the second switching unit 104, the third switching unit 105, the fourth switching unit 106, the fifth switching unit 107, the sixth switching unit 108, and the like may be implemented by a processor CPU, an analog circuit, or a digital circuit.

It should be further noted that, for functions of the functional units in the media processing apparatus 10 described in this embodiment of this application, reference may be made to related descriptions of step S301 to step S305 in the method embodiment in FIG. 13. Details are not described herein again.

In the foregoing embodiments, the descriptions in the embodiments have respective focuses. For a part that is not described in detail in an embodiment, refer to related descriptions in other embodiments.

It should be noted that, for ease of description, the foregoing method embodiments are described as a series of combinations of actions. However, persons skilled in the art should be aware that this application is not limited to the described order of the actions, because some steps may be performed in another order or simultaneously according to this application. In addition, persons skilled in the art should also be aware that embodiments described in this specification are all example embodiments, and the described actions and modules are not necessarily required for this application.

In several embodiments provided in this application, it should be understood that the disclosed apparatuses may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical or another form.

The units described as separate parts may or may not be physically separate, and parts shown as units may or may not be physical units, may be located in one place, or may be distributed on a plurality of network units. Some or all of the units may be selected according to actual requirements to achieve objectives of solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The storage medium may include any medium that can store program code, for example, a USB flash drive, a removable hard disk, a magnetic disk, an optical disc, a read-only memory (Read-Only Memory, ROM), or a random access memory (Random Access Memory, RAM).

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A media processing apparatus, applied to an intelligent terminal, wherein the apparatus comprises a central processing unit CPU, an audio input/output unit, an audio digital signal processor DSP, and a video processing unit; the intelligent terminal comprises a low power mode and a speaker mode; in the low power mode, the CPU and the audio input/output unit are in an on state, and the audio DSP and the video processing unit are in an off state; and in the speaker mode, the CPU, the audio input/output unit, and the audio DSP are in an on state, and the video processing unit is in an off state;
when the intelligent terminal is in the low power mode, the CPU is configured to receive a first voice instruction through the audio input/output unit; and
the CPU is further configured to: in response to the first voice instruction, control the intelligent terminal to switch from the low power mode to the speaker mode.

2. The apparatus according to claim 1, wherein the CPU is specifically configured to: in response to the first voice instruction, wake up the audio DSP, and turn on an audio player, to control the intelligent terminal to switch from the low power mode to the speaker mode.

3. The apparatus according to claim 1 or 2, wherein when the intelligent terminal is in the speaker mode, the CPU is further configured to receive a second voice instruction through the audio input/output unit; and
the CPU is further configured to: in response to the second voice instruction, control the intelligent terminal to switch from the speaker mode to the low power mode.

4. The apparatus according to claim 1 or 2, wherein when the intelligent terminal is in the speaker mode, the CPU is further configured to: if no audio play service is performed and no voice instruction is received within preset duration, control the intelligent terminal to switch from the speaker mode to the low power mode.

5. The apparatus according to claim 3 or 4, wherein the CPU is specifically configured to turn off the audio DSP and turn off the audio player, to control the intelligent terminal to switch from the speaker mode to the low power mode.

6. The apparatus according to any one of claims 1 to 5, wherein the intelligent terminal further comprises an on mode; in the on mode, the CPU, the audio input/output unit, the audio DSP, and the video processing unit are all in an on state, and a display of the intelligent terminal is in an on state; and in the low power mode and the speaker mode, the display of the intelligent terminal is in an off state.

7. The apparatus according to claim 6, wherein when the intelligent terminal is in the speaker mode, the CPU is further configured to: in response to a received first power-on instruction, control the intelligent terminal to switch from the speaker mode to the on mode, wherein the controlling the intelligent terminal to switch from the speaker mode to the on mode comprises: turning on the display, and turning on the video processing unit.

8. The apparatus according to claim 6 or 7, wherein when the intelligent terminal is in the on mode, the CPU is further configured to: receive a speaker mode switching instruction through the audio input/output unit, and in response to the speaker mode switching instruction, control the intelligent terminal to switch from the on mode to the speaker mode; or
receive a sleep instruction through the audio input/output unit, and in response to the sleep instruction, control the intelligent terminal to switch from the on mode to the low power mode.

9. The apparatus according to any one of claims 6 to 8, wherein when the intelligent terminal is in the low power mode, the CPU is further configured to: in response to a received second power-on instruction, control the intelligent terminal to switch from the low power mode to the on mode, wherein the controlling the intelligent terminal to switch from the low power mode to the on mode comprises: turning on the display, and turning on the audio DSP and the video processing unit.

10. The apparatus according to any one of claims 6 to 9, wherein the CPU comprises a plurality of CPU cores; and
when the intelligent terminal is in the low power mode, a part of CPU cores in the CPU are in an operating state, and an operating frequency of the part of CPU cores in the operating state is less than an operating frequency of a CPU core corresponding to a case in which the intelligent terminal is in the on mode.

11. The apparatus according to any one of claims 1 to 10, wherein when the intelligent terminal is in the low power mode, a voice wakeup process in the CPU is in an enabled state; and when the intelligent terminal is in the speaker mode, an audio decoding and play process in the CPU is in an enabled state.

12. A media processing method, applied to an intelligent terminal, wherein the intelligent terminal comprises a central processing unit CPU, an audio input/output unit, an audio digital signal processor DSP, and a video processing unit; the intelligent terminal comprises a low power mode and a speaker mode; in the low power mode, the CPU and the audio input/output unit are in an on state, and the audio DSP and the video processing unit are in an off state; in the speaker mode, the CPU, the audio input/output unit, and the audio DSP are in an on state, and the video processing unit is in an off state; and the method comprises:
when the intelligent terminal is in the low power mode, receiving, by the CPU, a first voice instruction through the audio input/output unit; and
controlling, by the CPU in response to the first voice instruction, the intelligent terminal to switch from the low power mode to the speaker mode.

13. The method according to claim 12, wherein the controlling, by the CPU in response to the first voice instruction, the intelligent terminal to switch from the low power mode to the speaker mode comprises:
waking up, by the CPU in response to the first voice instruction, the audio DSP, and turning on an audio player, so that the intelligent terminal switches from the low power mode to the speaker mode.

14. The method according to claim 12 or 13, wherein the method further comprises:
when the intelligent terminal is in the speaker mode, receiving, by the CPU, a second voice instruction through the audio input/output unit; and
controlling, by the CPU in response to the second voice instruction, the intelligent terminal to switch from the speaker mode to the low power mode.

15. The method according to claim 12 or 13, wherein the method further comprises:
when the intelligent terminal is in the speaker mode, if no audio play service is performed and no voice instruction is received within preset duration, controlling, by the CPU, the intelligent terminal to switch from the speaker mode to the low power mode.

16. The method according to claim 14 or 15, wherein the controlling the intelligent terminal to switch from the speaker mode to the low power mode comprises:
turning off, by the CPU, the audio DSP, and turning off the audio player, so that the intelligent terminal switches from the speaker mode to the low power mode.

17. The method according to any one of claims 12 to 16, wherein the intelligent terminal further comprises an on mode; in the on mode, the CPU, the audio input/output unit, the audio DSP, and the video processing unit are all in an on state, and a display of the intelligent terminal is in an on state; and in the low power mode and the speaker mode, the display of the intelligent terminal is in an off state.

18. The method according to claim 17, wherein the method further comprises:
when the intelligent terminal is in the speaker mode, turning on, by the CPU in response to a received first power-on instruction, the display, and turning on the video processing unit, to control the intelligent terminal to switch from the speaker mode to the on mode.

19. The method according to claim 17 or 18, wherein the method further comprises:
when the intelligent terminal is in the on mode, receiving, by the CPU, a speaker mode switching instruction through the audio input/output unit, and in response to the speaker mode switching instruction, controlling the intelligent terminal to switch from the on mode to the speaker mode; or
when the intelligent terminal is in the on mode, receiving, by the CPU, a sleep instruction through the audio input/output unit, and in response to the sleep instruction, controlling the intelligent terminal to switch from the on mode to the low power mode.

20. The method according to any one of claims 17 to 19, wherein the method further comprises:
when the intelligent terminal is in the low power mode, turning on, by the CPU in response to a received second power-on instruction, the display, and turning on the audio DSP and the video processing unit, to control the intelligent terminal to switch from the low power mode to the on mode.

21. The method according to any one of claims 17 to 20, wherein the CPU comprises a plurality of CPU cores; and
when the intelligent terminal is in the low power mode, a part of CPU cores in the CPU are in an operating state, and an operating frequency of the part of CPU cores in the operating state is less than an operating frequency of a CPU core in the on mode.

22. The method according to any one of claims 12 to 21, wherein when the intelligent terminal is in the low power mode, a voice wakeup process in the CPU is in an enabled state; and when the intelligent terminal is in the speaker mode, an audio decoding and play process in the CPU is in an enabled state.

23. A media processing apparatus, applied to an intelligent terminal, wherein the intelligent terminal comprises a central processing unit CPU, an audio input/output unit, an audio digital signal processor DSP, and a video processing unit; the intelligent terminal comprises a low power mode and a speaker mode; in the low power mode, the CPU and the audio input/output unit are in an on state, and the audio DSP and the video processing unit are in an off state; in the speaker mode, the CPU, the audio input/output unit, and the audio DSP are in an on state, and the video processing unit is in an off state; and the apparatus comprises:
a first receiving unit, configured to receive a first voice instruction when the intelligent terminal is in the low power mode; and
a first switching unit, configured to: in response to the first voice instruction, control the intelligent terminal to switch from the low power mode to the speaker mode.

24. The apparatus according to claim 23, wherein the first switching unit is specifically configured to:
in response to the first voice instruction, wake up the audio DSP, and turn on an audio player, to control the intelligent terminal to switch from the low power mode to the speaker mode.

25. The apparatus according to claim 23 or 24, wherein the apparatus further comprises:
a second receiving unit, configured to receive a second voice instruction when the intelligent terminal is in the speaker mode; and
a second switching unit, configured to: in response to the second voice instruction, control the intelligent terminal to switch from the speaker mode to the low power mode.

26. The apparatus according to claim 23 or 24, wherein the apparatus further comprises:
a third switching unit, configured to: when the intelligent terminal is in the speaker mode, if no audio play service is performed and no voice instruction is received within preset duration, control the intelligent terminal to switch from the speaker mode to the low power mode.

27. An intelligent terminal, wherein the intelligent terminal comprises a low power mode, a speaker mode, and an on mode, the intelligent terminal comprises the media processing apparatus according to any one of claims 1 to 11 or claims 23 to 26, and the media processing apparatus controls the intelligent terminal to switch between the low power mode, the speaker mode, and the on mode.

28. A computer-readable storage medium, wherein the computer-readable storage medium stores a computer program, and when the computer program is executed by a computer or a processor, the method according to any one of claims 12 to 22 is implemented.

29. A computer program product, wherein the computer program product comprises a computer program, and when the computer program is executed by a computer or a processor, the computer or the processor is enabled to perform the method according to any one of claims 12 to 22.
